# EUROPÄISCHE PATENTSCHRIFT

(11) **EP 1 224 624 B1**
(45) Veröffentlichungstag und Bekanntmachung des Hinweises auf die Patenterteilung: **18.06.2003**
(21) Anmeldenummer: 00979502.2
(22) Anmeldetag: 18.10.2000
(51) Int. Cl.: G06T 17/00, G06T 11/00

(54) **VERFAHREN ZUR ECHTZEIT-DARSTELLUNG VON GROSSEN VOLUMENDATENMENGEN**
METHOD FOR THE REAL-TIME RENDERING OF LARGE VOLUME DATA SETS
PROCEDE PERMETTANT LA REPRESENTATION EN TEMPS REEL DE GRANDES QUANTITES DE DONNEES VOLUMETRIQUES

(30) Priorität: 18.10.1999 DE 19950013
(43) Veröffentlichungstag der Anmeldung: 24.07.2002
(73) Patentinhaber: FRAUNHOFER-GESELLSCHAFT ZUR FÖRDERUNG DER ANGEWANDTEN FORSCHUNG E.V., 80636 München (DE)
(72) Erfinder: FROEHLICH, Bernd, 30163 Hannover (DE); TIRTASANA, Michael, 51061 Köln (DE)
(74) Vertreter: Hilleringmann, Jochen, Dipl.-Ing.
(86) Internationale Anmeldenummer: EP0010254
(87) Internationale Veröffentlichungsnummer: WO01029773

(56) Entgegenhaltungen:
- US-A- 4 862 392
- US-A- 5 123 084
- YAGEL R ET AL: "ACCELERATING VOLUME ANIMATION BY SPACE-LEAPING" PROCEEDINGS OF THE CONFERENCE ON VISUALIZATION,US,NEW YORK, IEEE, Bd. -, 25. Oktober 1993 (1993-10-25), Seiten 62-69, XP000475412 ISBN: 0-8186-3942-3
- JUSKIW S ET AL: "Interactive rendering of volumetric data sets" COMPUTERS AND GRAPHICS,GB,PERGAMON PRESS LTD. OXFORD, Bd. 19, Nr. 5, 1. September 1995 (1995-09-01), Seiten 685-693, XP004000242 ISSN: 0097-8493

## Beschreibung

Bildgebende Verfahren, wie die Computer Tomographie (CT) im Bereich der Medizin, Reflexionsmessungen im Bereich der Erdölindustrie oder auch Computersimulationen von z.B. Strömungssimulationen, liefern heute sehr hochaufgelöste dreidimensionale Daten, die im Bereich mehrerer hundert Megabyte bis in die Terabyte gehen können. Die gelieferten Datenmengen sind im allgemeinen als dreidimensionale Matrix strukturiert, die als Einträge die gemessenen Werte hat. Jeder Wert stellt einen Abtastwert in einem kleinen Raumbereich dar. Diese Einträge in die Matrix werden auch als Voxels (Volumenbilddaten) bezeichnet.

Die Visualisierung der Daten erfolgt im allgemeinen durch beliebige Schnitte durch das dreidimensionale Volumen oder durch das sogenannte Volumenrendering, das eine halbtransparente, dreidimensionale Darstellung der Daten erlaubt.

Besonders interessant ist die Echtzeit-Visualisierung dieser Daten, bei der mehrere Schnitt- oder Volumenrendering-Bilder pro Sekunde generiert werden. Die Echtzeitdarstellung erfolgt heute zumeist mit Unterstützung durch Grafikhardware. Allerdings verfügen heutige Grafikkarten über einen limitierten Speicher für dreidimensionale Volumendaten, die in diesem Bereich auch als sogenannte 3D-Texturen bezeichnet werden. Diese Speichergröße für 3D-Texturen liegt typischerweise im Bereich zwischen 1 MB im Low-End-Bereich und 64 MB auf High-End-Grafikcomputern. Bei einer Auflösung von 8 Bit pro Voxel ist man damit auf eine maximale Auflösung von 512x512x256 Voxels bei 64 MB Texturspeicher beschränkt. Größere Volumen lassen sich damit nicht oder nur mit sehr langsamen Bildwiederholraten darstellen.

Ein Verfahren zur Visualisierung von Volumendaten ist aus US 5 123 084 bekannt. Dieses Dokument offenbart ein Visualisierungsverfahren, bei dem die darzustellenden Volumendaten in eine sogenannte "Octree" Struktur zerlegt werden. Durch die baumartige Struktur der Daten und deren Aufteilung auf Speicher und schnellen Zwischenspeicher wird eine beschleunigte hierarchische Darstellung erreicht.

Es wird ein Verfahren vorgestellt, das eine hohe Bildwiederholrate garantiert, und zwar auch bei Volumendaten, die größer als der Texturspeicher sind.

Zur Lösung dieser Aufgabe wird mit der Erfindung ein Verfahren zur Echtzeit-Darstellung großer Mengen von Volumendaten vorgeschlagen, bei dem
a) eine Teilmenge der Volumendaten, anhand derer innerhalb eines Darstellungserzeugungsintervalls eine Darstellung der Volumendaten erfolgt, in einem Zwischenspeicher geladen wird, wobei die maximale Volumendaten-Laderate, mit der Volumendaten innerhalb eines Ladeintervalls in den Zwischenspeicher geladen werden können, sowie die maximale Menge an in dem Zwischenspeicher speicherbaren Volumendaten begrenzt ist und innerhalb der Teilmenge der Volumendaten eine Gruppe von Volumendaten definierbar ist, die für die Bilderzeugung in einem Darstellungserzeugungsintervall weniger relevant als andere Volumendaten der Teilmenge sind,
b) der Volumendatensatz hierarchisch in Blöcke von Volumendaten unterschiedlicher Unterteilungsstufen unterteilt wird, wobei jeder Block einer Unterteilungsebene die Volumendaten der Blöcke der nächst niedrigeren Unterteilungsebene, denen der betreffende Block zugeordnet ist, in einer gröberen Auflösung als die Volumendaten der Blöcke dieser nächst niedrigeren Unterteilungsebene enthält,
c) beginnend mit der obersten Unterteilungsebene ermittelt wird, in welchen Blöcken für die Darstellung im nächsten Darstellungserzeugungsintervall benötigte Volumendaten enthalten sind, und anhand der benötigten Blöcke die Menge an für die Darstellung im nächsten Darstellungserzeugungsintervall benötigten Volumendaten ermittelt wird,
d) die Menge an benötigten Volumendaten mit der Menge an maximal in dem Zwischenspeicher speicherbaren Volumendaten verglichen wird,
e) in dem Fall, dass die Menge an benötigten Volumendaten gleich der maximal speicherbaren Menge an Volumendaten ist, mit Schritt h) fortgefahren wird,
f) in dem Fall, dass die benötigte Menge an Volumendaten kleiner als die maximal speicherbare Menge an Volumendaten ist,
   - anhand der Blöcke der nächst niedrigeren Unterteilungsebene ermittelt wird, in welchen Blöcken dieser Unterteilungsebene für die Darstellung im nächsten Darstellungserzeugungsintervall benötigte Volumendaten enthalten sind,
      oder
   - sofern zuvor bereits der Schritt g) durchgeführt wurde, mit Schritt h) fortgefahren wird,
g) in dem Fall, dass die Menge an benötigten Volumendaten größer als die Menge an maximal speicherbaren Volumendaten ist, statt derjenigen Blöcke, die die Gruppe von für die Darstellung im nächsten Darstellungserzeugungsintervall weniger relevanten Volumendaten enthalten, der diesen Blöcken zugeordnete Block der nächst höheren Unterteilungsebene als benötigter Block ermittelt wird und danach mit Schritt d) fortgefahren wird,
h) die Menge an für die Darstellung im nächsten Darstellungserzeugungsintervall in den Zwischenspeicher benötigten und zu ladenden Volumendaten ermittelt wird, und zwar anhand der für die Darstellung im nächsten Darstellungserzeugungsintervall benötigten und nicht im Zwischenspeicher enthaltenen Blöcke,
i) die Menge an zu ladenden Volumendaten mit der maximalen Volumendaten-Laderate verglichen wird,
j) in dem Fall, dass die Menge an zu ladenden Volumendaten kleiner als die oder gleich der Volumendaten-Laderate ist, die noch zu ladenden der für die Darstellung im nächsten Darstellungserzeugungsintervall benötigten Volumendaten in den Zwischenspeicher geladen werden und im nächsten Darstellungserzeugungsintervall die Darstellung erfolgt,
k) in dem Fall, dass die Menge an zu ladenden Volumendaten größer als die maximale Volumendaten-Laderate ist, statt derjenigen Blöcke, die die Gruppe von für die Darstellung im nächsten Darstellungserzeugungsintervall weniger relevanten Volumendaten enthalten, der diesen Blöcken zugeordnete Block der nächst höheren Unterteilungsebene als benötigter Block ermittelt wird und mit h) fortgefahren wird.

Eine Variante der Erfindung betrifft ein Verfahren zur Echtzeit-Darstellung großer Mengen von Volumendaten, bei dem
a) eine Teilmenge der Volumendaten, anhand derer innerhalb eines Darstellungserzeugungsintervalls eine Bilderzeugung erfolgt, in einem Zwischenspeicher geladen wird, wobei die maximale Volumendaten-Laderate, mit der Volumendaten innerhalb eines Ladeintervalls in den Zwischenspeicher geladen werden können, und die maximale Menge an in dem Zwischenspeicher speicherbaren Volumendaten begrenzt ist und innerhalb der Teilmenge der Volumendaten eine Gruppe von Volumendaten definierbar ist, die für die Bilderzeugung in einem Darstellungserzeugungsintervall weniger relevant als andere Volumendaten der Teilmenge sind,
b) der Volumendatensatz hierarchisch in Blöcke von Volumendaten unterschiedlicher Unterteilungsebenen unterteilt wird, wobei jeder Block einer Unterteilungsebene die Volumendaten der Blöcke der nächst niedrigeren Unterteilungsebene, denen der betreffende Block zugeordnet ist, in einer gröberen Auflösung als die Volumendaten der Blöcke dieser nächst niedrigeren Unterteilungsebene enthält,
c) beginnend mit der obersten Unterteilungsebene ermittelt wird, in welchen Blöcken für die Darstellung des nächsten Darstellungserzeugungsintervalls benötigte Volumendaten enthalten sind,
d) die Anzahl an benötigten Blöcken mit für die Darstellung im nächsten Darstellungserzeugungsintervall benötigten Volumendaten mit der durch die maximale Menge an in dem Zwischenspeicher speicherbaren Volumendaten bestimmten Maximalblockanzahl an maximal speicherbaren Blöcken verglichen wird,
e) in dem Fall, dass die Anzahl an benötigten Blöcken gleich der Maximalblockanzahl ist, mit Schritt h) fortgefahren wird,
f) in dem Fall, dass die Anzahl an benötigten Blöcken kleiner als die Maximalblockanzahl ist,
   - anhand der Blöcke der nächst niedrigeren Unterteilungsebene ermittelt wird, in welchen Blöcken dieser Unterteilungsebene für die Darstellung im nächsten Darstellungserzeugungsintervall benötigte Volumendaten enthalten sind,
      oder
   - sofern zuvor bereits der Schritt g) durchgeführt wurde, mit Schritt h) fortgefahren wird,
g) in dem Fall, dass die Anzahl der benötigten Blöcke größer als die Maximalblockanzahl ist, statt derjenigen Blöcke, die die Gruppe von für die Darstellung im nächsten Darstellungserzeugungsintervall weniger relevanten Volumendaten enthalten, der diesen Blöcken zugeordnete Block der nächst höheren Unterteilungsebene als benötigter Block ermittelt wird und danach mit Schritt d) fortgefahren wird,
h) die aktuelle Blockladeanzahl an für die Darstellung im nächsten Darstellungserzeugungsintervall in den Zwischenspeicher zu ladenden Blöcke der benötigten Blöcke ermittelt wird, und zwar indem ermittelt wird, welche der für die Darstellung im nächsten Darstellungserzeugungsintervall benötigten Blöcke nicht im Zwischenspeicher enthalten sind,
i) die aktuelle Blockladeanzahl mit der der maximalen Volumendaten-Laderate entsprechenden Maximalblockladeanzahl verglichen wird,
j) in dem Fall, dass die aktuelle Blockladeanzahl kleiner als die oder gleich der Maximalblocktadeanzahl ist, die noch zu ladenden der für die Darstellung im nächsten Darstellungserzeugungsintervall benötigten Blöcke in den Zwischenspeicher geladen werden und im nächsten Darstellungserzeugungsintervall die Darstellung erfolgt,
k) in dem Fall, dass die aktuelle Blockladeanzahl größer als die Maximalblockladeanzahl ist, statt derjenigen Blöcke, die die Gruppe von für die Darstellung im nächsten Darstellungserzeugungsintervall weniger relevanten Volumendaten enthalten, der diesen Blöcken zugeordnete Block der nächst höheren Unterteilungsebene als benötigter Block ermittelt wird und mit h) fortgefahren wird.

Bei dem erfindungsgemäßen Verfahren wird davon ausgegangen, dass die Menge an für eine Darstellung benötigten Volumendaten auf Grund der Kapazität eines (Zwischen-)Speichers, in dem die für die Darstellung benötigten Volumendaten gespeichert sind, begrenzt ist. Ferner ist auch die Rate, mit der Volumendaten pro Ladeintervall in den Zwischenspeicher eingelagert werden, begrenzt. Um nun trotz dieser Randbedingungen hohe Bildwiederholraten garantieren zu können, wird erfindungsgemäß vorgeschlagen, für die Darstellung . innerhalb eines Darstellungserzeugungsintervalls weniger relevante Volumendaten in einer gröberen Auflösung darzustellen als die anderen für die Darstellung erforderlichen Volumendaten. Weniger relevant sind beispielsweise solche Bereiche einer Darstellung, die weiter vom Betrachter entfernt sind. Auf Grund des Verfahrens wird jedenfalls stets garantiert, dass die relevanteren Volumendaten höher aufgelöst, zumindest jedoch so hoch aufgelöst wie die weniger relevanten Volumendaten dargestellt werden. Hierzu wird der gesamte Volumendatensatz zuvor hierarchisch in Blöcke von Volumendaten unterschiedlicher Unterteilungs- und damit Auflösungsstufen unterteilt. In der obersten Unterteilungsebene existiert auch die gröbste Auflösung. Die unterste Unterteilungsebene garantiert dagegen die höchste Auflösung und beinhaltet beispielsweise die einzelnen Volumendaten selbst. Von der Abarbeitung des Verfahrens her ist es zweckmäßig wenn jeder Block jeder Unterteilungsebene die gleiche Anzahl von Volumendaten aufweist. Diese Struktur wird im folgenden auch mit "Octree" bezeichnet.

Zunächst wird ermittelt, in welcher Unterteilungsebene gerade noch weniger Blöcke mit für die Darstellung der benötigten Volumendaten existieren als durch die Maximalanzahl von in dem Zwischenspeicher speicherbaren Volumendaten bestimmt ist. Dann wird die nächst niedrigere Unterteilungsebene mit der nächst höheren Auflösung von Volumendaten betrachtet. Damit werden dann mehr Volumendaten für die Darstellung benötigt, als in den Zwischenspeicher einlagerbar sind. Nun werden die für die Darstellung weniger relevanten Volumendaten gröber dargestellt als die anderen. Damit reduziert sich die Menge an für die Darstellung benötigten Volumendaten. Auf diese Weise wird sukzessive die Menge an Volumendaten reduziert, bis diese Menge kleiner als die Kapazität des Zwischenspeichers ist. Ist dies erreicht, so wird die benötigte Volumendatenmenge daraufhin untersucht, dass ermittelt wird, welche der benötigten Volumendaten in den Zwischenspeicher geladen werden müssen. Denn es kann durchaus sein, dass im Zwischenspeicher bereits Volumendaten gespeichert sind, die für die Darstellung der Volumendaten im vorherigen Darstellungserzeugungsintervall benötigt wurden und auch für die Darstellung der Volumendaten im nächsten Darstellungserzeugungsintervall erforderlich sind. Ist die Differenzmenge an Volumendaten größer als die Laderate, d.h. die Volumendatenmenge, die pro Ladeintervall geladen werden darf, so muss die für die Darstellung im nächsten Darstellungserzeugungsintervall benötigte Menge an Volumendaten weiter nach dem obigen Muster durch Vergröberung der Auflösung der weniger relevanten Volumendaten reduziert werden. Dieses Vorgehen wird fortgeführt, bis die nachzuladende Menge an Volumendaten, die für die Darstellung im nächsten Darstellungserzeugungsintervall erforderlich ist, maximal gleich der Laderate ist.

Die oben angegebene Variante des erfindungsgemäßen Verfahrens sieht vor, die Menge an Volumendaten durch die Anzahl an Blöcken zu bestimmen, wobei sämtliche Blöcke gleich viele Volumendaten umfassen und vorzugsweise in der obersten Unterteilungsebene ein den gesamten Volumendatensatz umfassender Block vorhanden ist.

Die für die Darstellung weniger relevanten Volumendaten können vom Benutzer definiert werden. Hier handelt es sich z.B. um die am weitesten vom Betrachter entfernt liegenden Volumendaten größter Auflösung. Alternativ können aber auch bestimmte Bereiche des Volumendatensatzes unabhängig von ihrer Entfernung vom Betrachter als weniger relevant definiert sein. Die als weniger relevant eingestuften Volumendaten können sich auch von Darstellungsintervall zu Darstellungsintervall unterscheiden. Insbesondere können die Kriterien, anhand derer Volumendaten als für die Darstellung weniger relevant erachtet werden, innerhalb der einzelnen Darstellungsintervalle gleich oder unterschiedlich sein.

Die Reduzierung der Menge an für die Darstellung erforderlichen Volumendaten wird durch eine Vergröberung der Auflösung "erkauft". So kommt es also durchaus vor, dass in einer Darstellung der Volumendaten diese bereichsweise unterschiedlich stark aufgelöst dargestellt sind. Es hat sich als zweckmäßig erwiesen, hier lediglich Darstellungen der Volumendaten zuzulassen, die nur zwei unterschiedliche Auflösungsstufen umfassen.

Die Größe der Laderate, also die Menge an in einem Ladeintervall in den Zwischenspeicher ladbaren Volumendaten, ist in Abhängigkeit davon zu wählen, um wie viel sich die Volumendatenmenge pro Block von Unterteilungsebene zu Unterteilungsebene vergrößert. Setzt sich z. B. ein Block in der nächst niedrigeren Unterteilungsebene aus acht Blöcken zusammen, so sollte die Laderate so bemessen sein, dass in einem Ladeintervall die Volumendaten von mindestens acht Blöcken geladen werden können.

Die Menge an im Zwischenspeicher speicherbaren Volumendaten sollte ausreichend groß bemessen sein, so dass sich eine z.B. Schnittebene, die durch den Volumendatensatz gelegt ist, mit genügend feiner Auflösung darstellen lässt. Über die Größe des Zwischenspeichers in Form des Speichers auf der Graphikkarte eines z.B. PC bzw. einer Workstation sind bereits in der Beschreibungseinleitung Ausführungen gemacht worden, auf die insoweit verwiesen werden kann.

Die Erfindung wird nachfolgend anhand der Zeichnung näher erläutert. Im einzelnen zeigen dabei:
- Fig. 1: eine Veranschaulichung der Einteilung von Volumendaten in einzelne Blöcke für den dreidimensionalen Fall,
- Fig. 2: eine Veranschaulichung der Einteilung von zweidimensionalen Daten in einzelne Blöcke,
- Fign. 4 - 25: ein ersten Ausführungsbeispiel für den Aufbau einer Ebenendarstellung ohne Verschiebung, wobei die Ebene anschließend verschoben wird,
- Fign. 26 - 48: ein zweites Ausführungsbeispiel für den Aufbau einer Ebenendarstellung ohne Verschiebung, wobei die Ebene anschließend verschoben wird,
- Fign. 49 - 60: ein drittes Ausführungsbeispiel der Darstellung einer Ebene mit Verschiebung und
- Fign. 61 - 82: ein viertes Ausführungsbeispiel für den Aufbau einer Ebenendarstellung ohne Verschiebung.

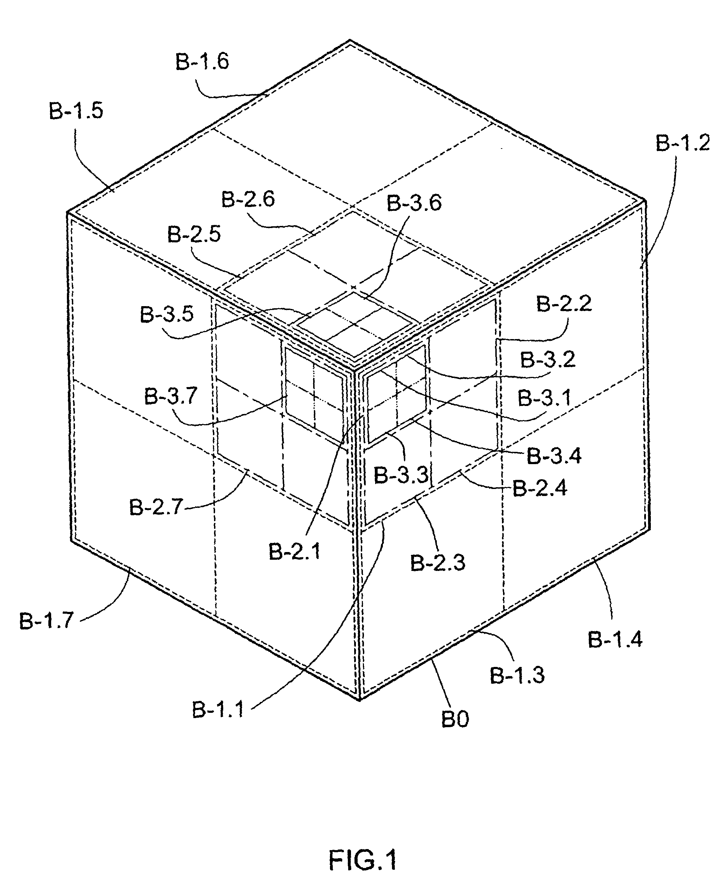

In Fig. 1 ist veranschaulicht, wie im dreidimensionalen Fall Volumendaten in einzelnen Unterteilungsebenen (in diesem Fall vier Unterteilungsebenen von -3 bis 0) hierarchisch in Blöcke (Bricks) unterteilt werden. Jeder Block jeder Unterteilungsebene weist dabei die gleiche Anzahl an Volumendaten auf, wobei diese Volumendaten von Unterteilungsebene zu Unterteilungsebene unterschiedlich sind.

Es sei in den Ausführungsbeispielen angenommen, dass in der untersten Unterteilungsebene 512 Blöcke existieren und dass diese Blöcke B-3.1 bis B-3.512 jeweils die Abtastwerte eines Volumens, also die einzelnen Voxel enthalten. Jeweils acht Blöcke werden zu einem Block der nächst höheren Unterteilungsebene -2 zusammengefasst, wobei gilt, dass die Anzahl der Volumendaten eines Blocks der Unterteilungsebene -2 gleich der Anzahl an Volumendaten eines Blocks der untersten Unterteilungsebene ist. In der Unterteilungsebene -2 existieren also 4 Blöcke (B-2.1 bis B-2.64), wobei z.B. der Block B-2.1 die Volumendaten der Blöcke B-3.1 bis B-3.8 repräsentiert, und zwar in einer gröberen Auflösung. Acht Volumendaten eines Blocks der untersten Ebene -3 werden also durch ein Volumendatum eines Blocks der nächst höheren Unterteilungsebene -2 repräsentiert.

Gemäß dem obigen Schema sind jeweils acht Blöcke der Unterteilungsebene - 1 zusammen gefasst. So setzt sich z.B. der Block B-1.1 aus den Blöcken B-2.1 bis B-2.8 zusammen. Auf der obersten Unterteilungsebene 0 existiert in diesem Fall lediglich ein Block B0, der sich aus den acht Blöcken B-1.1 bis B-1.8 zusammensetzt. Auf diese Weise ergibt sich, dass die Volumendaten von einer niedrigen Unterteilungsebene zu einer höheren Unterteilungsebene immer gröber d.h. mit immer größerer Auflösung darstellbar sind. Eine solche Blockverschachtelung wird auch "Octree" genannt.

Anders ausgedrückt wird also der Texturspeicher (Volumendatensatz) in eine Menge gleichgroßer Blöcke, die sogenannten Bricks, unterteilt. Jeder Brick kann eine eigene dreidimensionale Textur einer bestimmten Größe (z.B. 64x64x64) aufnehmen. Der Volumendatensatz (z.B. 1024x1024x1024 in der obersten Unterteilungsebene) wird vorzugsweise in gleichgroße Blöcke zerlegt, so dass jeweils einer dieser Volumendatensatz-Blöcke in einen Brick passt. Außerdem werden 2x2x2 nebeneinanderliegende Blöcke der Volumendaten wieder zu einem Block mit der gleichen Auflösung zusammengefasst. Dadurch entsteht in der nächst niedrigeren Unterteilungsebene ein Datensatz mit einem Achtel der ursprünglichen Auflösung, bei dem dann wieder 2x2x2 Blöcke zusammengefasst werden usw. Dadurch entsteht eine Hierarchie, die oben auch als "Octree" bezeichnet ist. Unter Zugrundelegung des Beispiels eines 1024x1024x1024 Voxel-Datenvolumens entstehen dann 16x16x16 Blöcke auf der feinstaufgelösten Stufe, auf der nächsten Stufe dann 8x8x8 Blöcke, 4x4x4 Blöcke, dann 2x2x2 und auf der obersten Stufe noch ein Block. Die Auflösung des Datensatzes wird damit sukzessive reduziert, von 1024x1024x1024 auf 512x512x512 auf 256x256x256, 128x128x128 und 64x64x64 auf der obersten Stufe. Betrachtet man nun z.B. eine Schnittebene durch den Datensatz, so werden im allgemeinen nur wenige der Blöcke des Datenvolumens geschnitten. Nur diese werden in den Texturspeicher eingelagert und für die Darstellung der Daten auf der Schnittebene benutzt. Das sogenannte Volumenrendering erfolgt durch das Übereinanderlegen mehrerer solcher halbtransparenter Schnittebenen und kann damit wie mehrere Schnittebenen behandelt werden. Das Verfahren kann statt Ebenen auch polygonale Körper berücksichtigen, auf deren Oberfläche die Volumendaten dargestellt werden sollen. Für alle darzustellenden Schnittebenen werden die Blöcke, die für die Darstellung relevant sind, bestimmt. Allerdings sind zwei wichtige Bedingungen einzuhalten:
1. Die Anzahl der insgesamt benötigten Blöcke muss in den Texturspeicher passen.
2, Das Laden dieser Blöcke kostet Zeit, so dass von einem Bild zum nächsten nur eine bestimmte Anzahl neuer Blöcke in den Texturspeicher geladen werden kann, ohne die Bildwiederholrate unter ein gewisses Limit fallen zu lassen.

Beide Probleme werden bei dem hier zu beschreibenden Verfahren gelöst. Dazu werden die Schnittebenen (oder auch andere polygonale Objekte) von "oben", d.h. von der obersten Unterteilungsebene aus, stufenweise in den Octree einsortiert, bis die maximal zulässige Anzahl an Blöcken (Bedingung 1) erreicht wird. Dabei werden Blöcke, die näher zum Auge des Betrachters liegen, zuerst unterteilt. Dann wird festgestellt, welche der Blöcke im letzten Durchgang schon geladen waren. Falls mehr neue Blöcke benötigt werden als zulässig sind (Bedingung 2), dann werden Blöcke wieder zusammengefasst, bis die 2. Bedingung eingehalten ist. Das Zusammenfassen erfolgt zuerst für Blöcke, die weiter vom Betrachter entfernt sind. Die Unterteilungsschritte und das darauffolgende Zusammenfassen lassen sich auch in einem Ablauf integrieren. Bei der schnellen Bewegung einer Schnittebene werden durch die 2. Bedingung im allgemeinen "grobe", niedrig aufgelöste Blöcke dargestellt, was sehr gut mit der allgemein bekannten Bewegungsunschärfe korreliert. Beendet man die Bewegung der Schnittebene, dann werden nach und nach besser aufgelöste Blöcke in den Texturspeicher geladen, bis die 1. Bedingung erreicht ist.

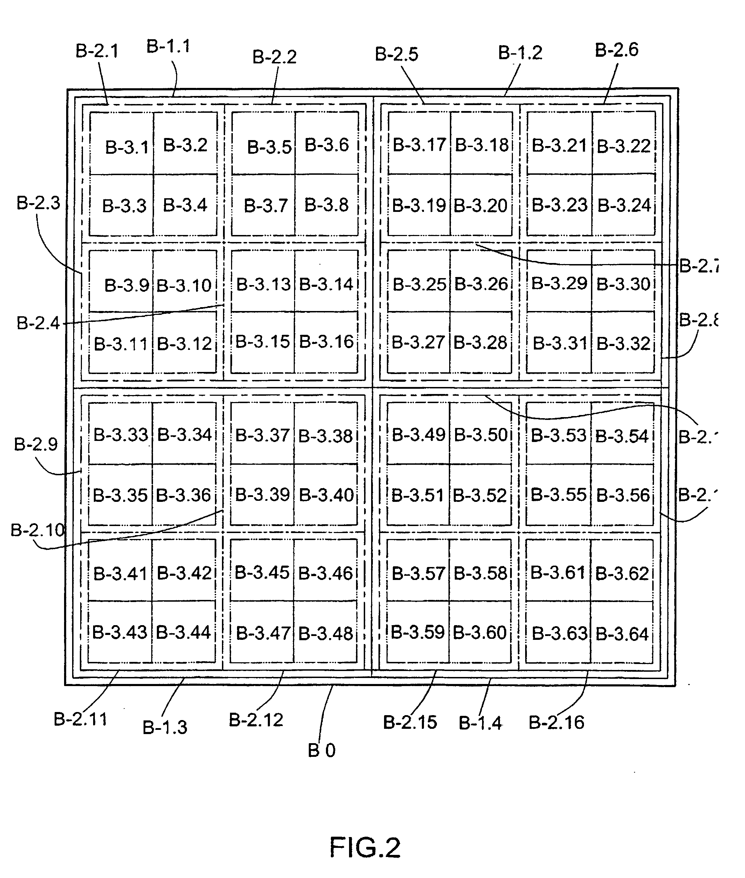

Für den zweidimensionalen Fall, anhand dessen nachfolgend einige Ausführungsbeispiele des Verfahrens erläutert werden, ergibt sich die Situation gemäß Fig. 2. Hierin sind für die einzelnen Blöcke, die einem Block im 3D-Fall entsprechen, die gleichen Bezugszeichen vergeben. Aus Fig. 2 ergibt sich auch die Bezeichnung der Blöcke der einzelnen Unterteilungsebenen; auf diese Bezeichnungen wird im folgenden Bezug genommen.

Im zweidimensionalen Fall stellt sich beispielsweise eine Schnittebene, die durch einen Volumendatensatz gelegt ist, als Linie dar. In den nachfolgenden Fign. soll diese Linie eine Schnittebene durch einen Volumendatensatz repräsentieren.

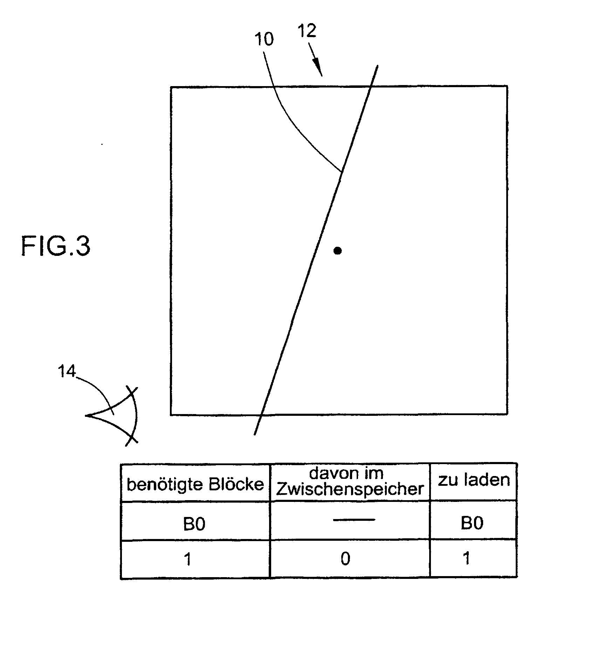

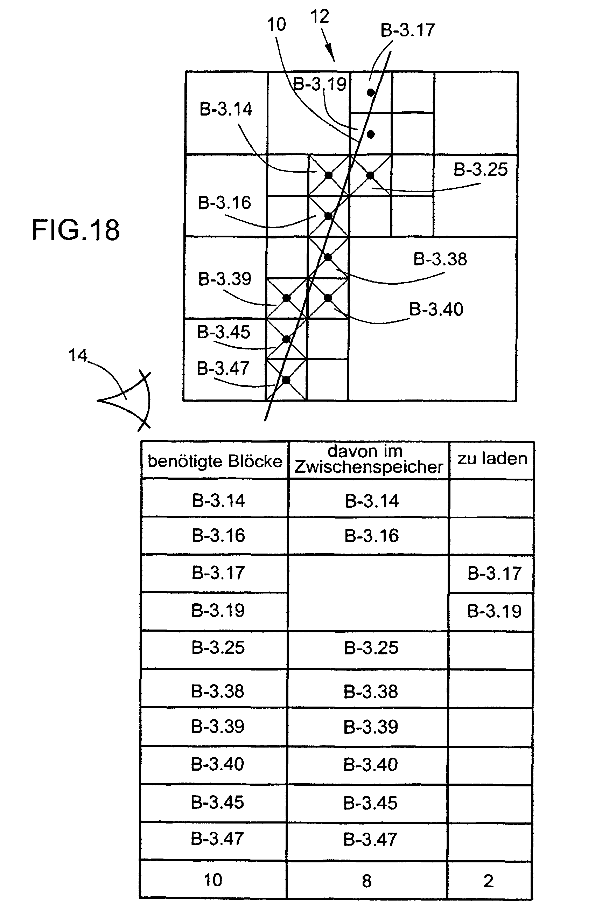

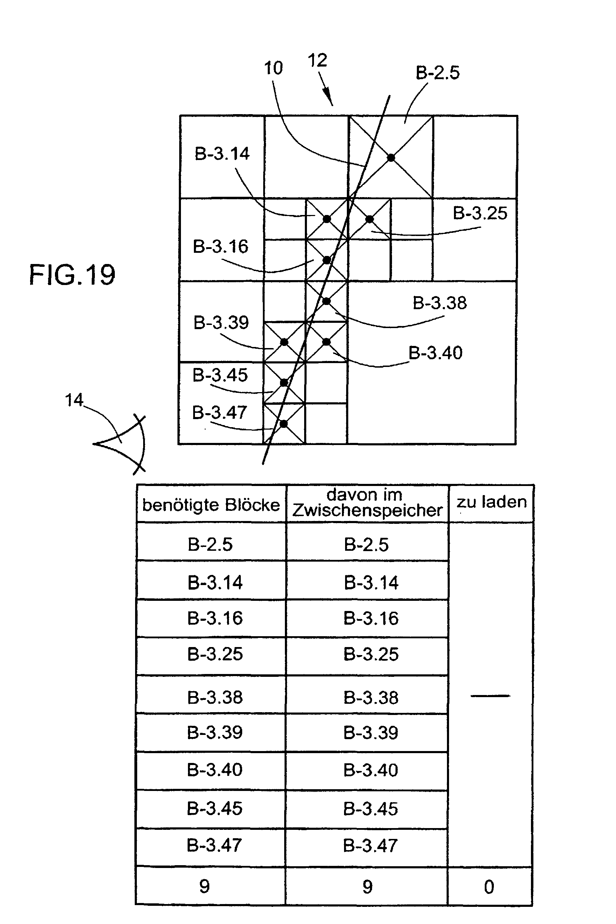

Bei dem nachfolgend anhand der Fign. 3 bis 25 beschriebenen ersten Ausführungsbeispiel soll eine durch eine Linie repräsentierte Schnittebene 10, die durch einen mit 12 bezeichneten Volumendatensatz verläuft, dargestellt werden, wobei der Betrachter bei 14 angedeutet ist. Es soll gelten, dass in den Zwischenspeicher, der die für die Darstellung der Ebene 10 erforderlichen Volumendaten enthält, maximal neun Blöcke gespeichert werden können. Als weitere Randbedingung gilt, dass in einem Ladeintervall maximal 5 Blöcke an Volumendaten geladen werden können. Bei den für die Darstellung der Ebene 10 weniger relevanten Volumendaten soll es sich um solche Volumendaten handeln, die weiter beabstandet vom Betrachter 14 sind.

Bei dem hier zu beschreibenden Verfahren gemäß dem ersten Ausführungsbeispiel wird zunächst die Menge an Volumendaten bestimmt, die für die Darstellung der Ebene 10 benötigt wird, wenn man davon ausgeht, dass die im (einzigen) Block B0 der obersten Unterteilungsebene enthaltenen Volumendaten zu Grunde gelegt werden. Damit benötigt man für die Darstellung einen Block. Unter der Voraussetzung, dass der Zwischenspeicher noch leer ist, kann die Aussage getroffen werden, dass von den für die Darstellung der Ebene 10 benötigten Blöcken keiner im Zwischenspeicher gespeichert ist. Darauf resultiert, dass ein Block in den Zwischenspeicher zu laden ist, um anschließend die Ebene 10 darstellen zu können. Dieser Sachverhalt mit den jeweils benötigten Blöcken, den davon im Zwischenspeicher gespeicherten Blöcken und den noch zu ladenden Blöcken ist tabellarisch in Fig. 3 und in den Folgefiguren 4 bis 25 angegeben.

Da es Ziel des Verfahrens ist, die darzustellende Ebene 10 möglichst hoch aufgelöst darstellen zu können, ist man also bemüht, möglichst viele Blöcke hoher Auflösung in dem Zwischenspeicher zu speichern, wobei diejenigen für die Darstellung der Ebene 10 benötigten Volumendaten, die nahe am Betrachter 14 sind, höher aufgelöst sein sollten als die weiter entfernt vom Betrachter 14 liegenden Volumendaten. Unter den obigen Bedingungen und Vorgaben erkennt man also, dass die Darstellung der Ebene 10 lediglich anhand des Block B0 der obersten Unterteilungsebene unzureichend ist und dass noch bei weitem nicht die Vorgabe, maximal 9 Blöcke im Zwischenspeicher speichern zu können, erfüllt ist. Daher wird ausgehend von dem Schritt gemäß Fig. 3 durch Unterteilung der Block B0 in die vier Blöcke B-1.1 bis B-1.4 der nächst niedrigeren Unterteilungsebene -1 unterteilt.

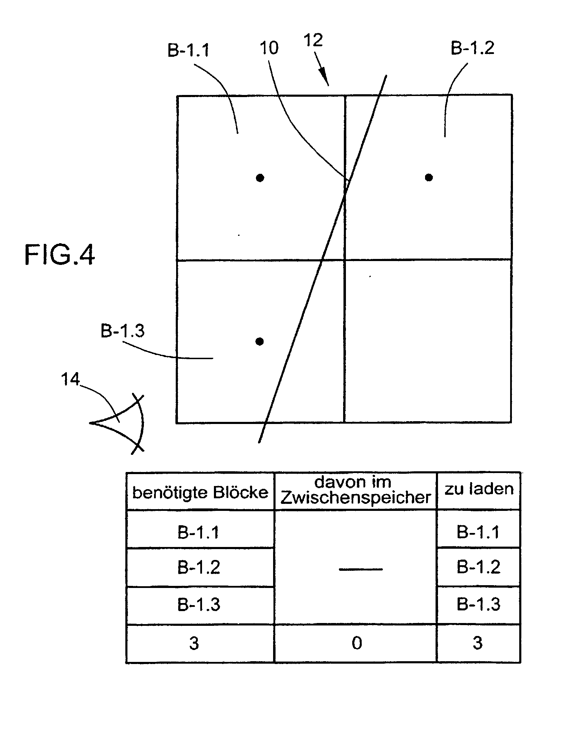

Dadurch entsteht die Situation gemäß Fig. 4, der zu Folge erkennbar ist, dass nunmehr für die Darstellung der Ebene 10 die Volumendaten von drei der Blöcke der Unterteilungsebene -1 benötigt werden. Von diesen Blöcken ist keiner im Zwischenspeicher gespeichert, so dass drei Blöcke geladen werden müssen. Da auch in dieser Phase des Verfahrens die maximal zulässige speicherbare Anzahl an Blöcken noch nicht erreicht ist, werden die drei Blöcke der Unterteilungsebene -1 weiter unterteilt.

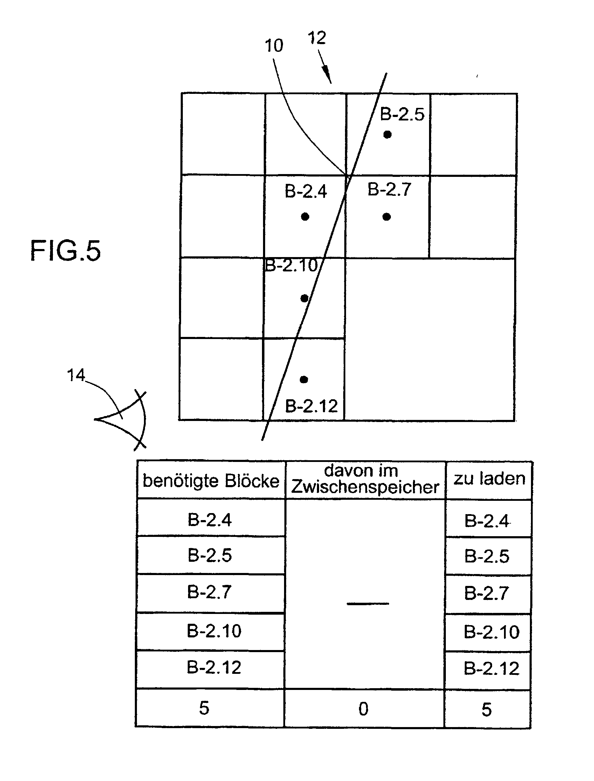

Es entsteht auf diese Weise die Situation gemäß Fig. 5. Die benötigten Blöcke sind, wie im übrigen auch in den Fign. 3 und 4 und den anderen Fign. in der Zeichnung durch einen Punkt markiert. Gemäß Fig. 5 werden nun also fünf Blöcke der Unterteilungsebene -2 für die Darstellung der Ebene 10 benötigt. Auch hier gilt, dass von diesen Blöcken bisher noch keiner im Zwischenspeicher gespeichert ist, weshalb also fünf Blöcke nachzuladen sind.

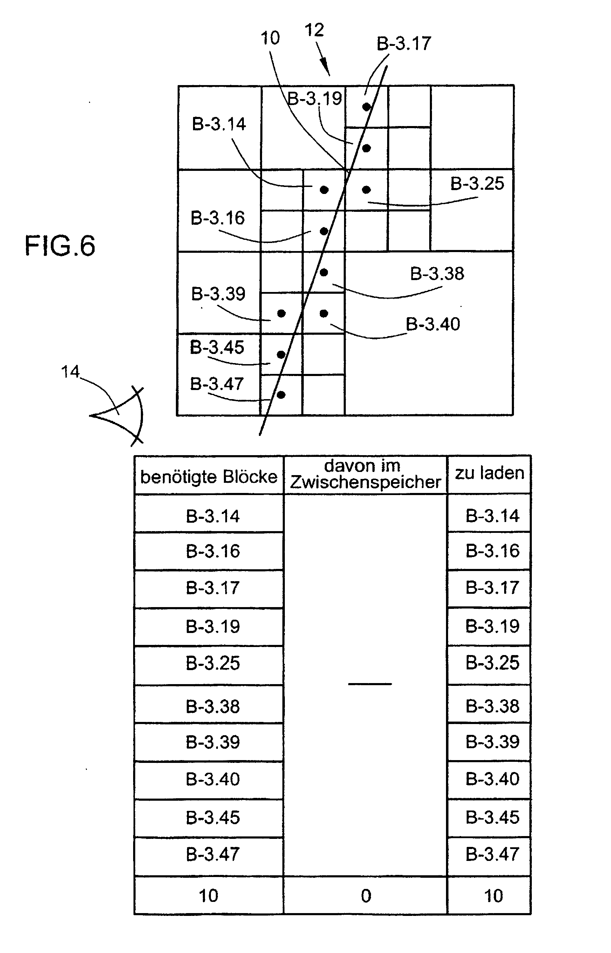

Da weiterhin die maximale Anzahl an speicherbaren Blöcken noch nicht erreicht ist, wird gemäß Fig. 6 weiter unterteilt, und zwar in Blöcke der nächst niedrigeren Unterteilungsebene -3, bei der es sich in diesem Ausführungsbeispiel um die unterste Unterteilungsebene handelt. Nun ist zu erkennen, dass für die Darstellung der Ebene 10 unter Zugrundelegung der Volumendaten der Blöcke der niedrigsten Unterteilungsebene zehn solche Blöcke benötigt werden. Damit ist die Randbedingung, dass nämlich maximal neun Blöcke in den Zwischenspeicher speicherbar sind, überschritten. Es muss also nun versucht werden, die Anzahl an für die Darstellung der Ebene 10 benötigten Blöcken wieder zu reduzieren.

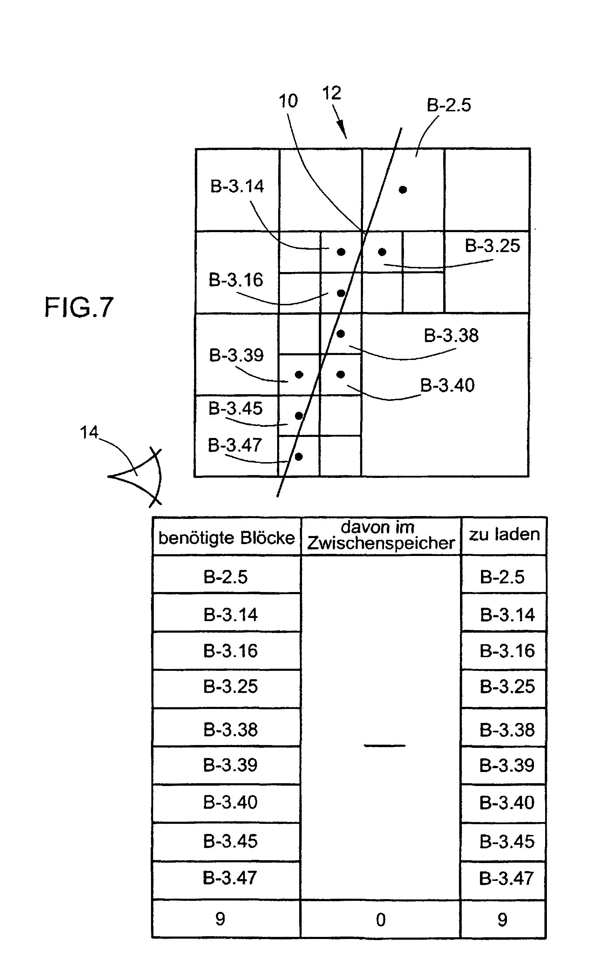

Dies wird gemäß Fig. 7 dadurch realisiert, dass nun die am weitesten vom Betrachter 14 entfernt liegenden Blöcke B-3.17 und B-3.19 ersetzt werden durch denjenigen Block der nächst höheren Unterteilungsebene, dessen Volumendaten die Volumendaten der Blöcke B-3.17 und B-3.19 mit umfasst, und zwar in einer gröberen Auflösung. Mit anderen Worten werden also die Volumendaten der Blöcke B-3.17 und B-3.19 durch die Volumendaten des Blocks B-2.5 ersetzt. Die übrigen Blöcke bleiben unverändert, so dass sich insgesamt die Anzahl an Blöcken, d.h. die Volumendatenmenge, die für die Darstellung der Ebene 10 erforderlich ist, um einen Block reduziert hat. Damit ist die Bedingung, dass maximal neun Blöcke im Zwischenspeicher gespeichert werden können, erfüllt. Da jedoch von diesen neun Blöcken noch keiner im Zwischenspeicher gespeichert ist, müssten also in einem Ladeintervall neun Blöcke geladen werden. Dies verstößt gegen die zweite Bedingung, wonach maximal 5 Blöcke in einem Ladeintervall geladen werden können.

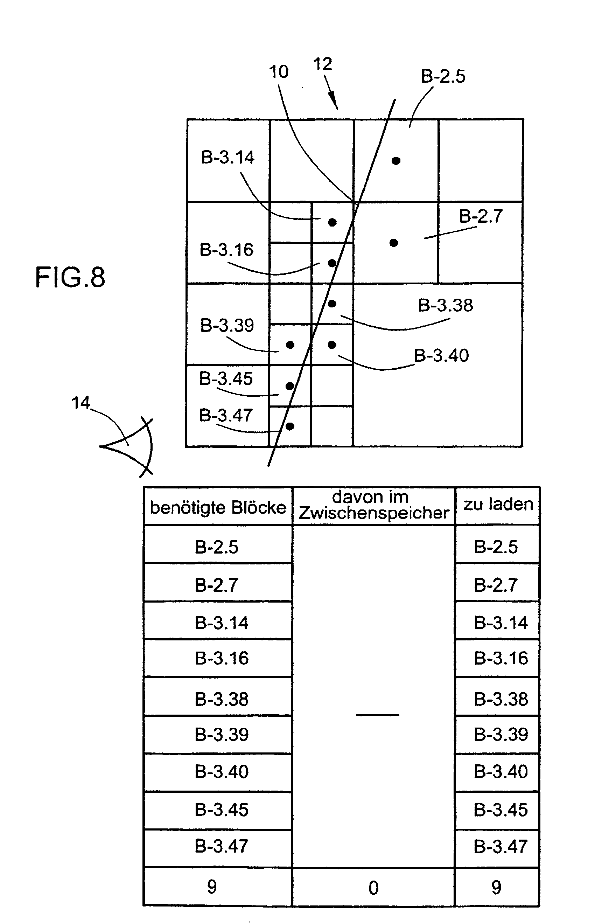

Also wird die Anzahl an für die Darstellung benötigten Blöcken weiter reduziert, wie dies in Fig. 8 gezeigt ist. In diese Fall wurden die Volumendaten des Blocks B-3.25 durch die Volumendaten des zugehörigen Blocks B-2.7 der nächst höheren Unterteilungsebene ersetzt. Leider ergibt sich durch dieses Ersetzen keine Reduktion bezüglich der nunmehr benötigten Anzahl an Blöcken und damit auch keine Reduktion an Volumendaten, wie sich aus der Tabelle der Fig. 8 und der Fig. 8 selbst ergibt. Denn weiterhin werden neun Blöcke benötigt. Damit sind wiederum auch neun Blöcke in einem Ladeintervall nachzuladen, was nicht zulässig ist.

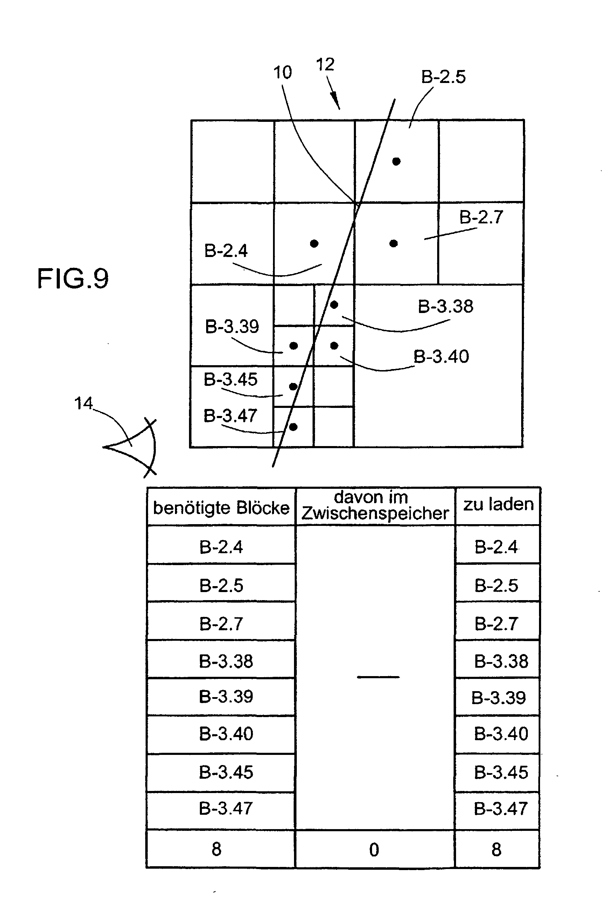

Aus diesem Grund wird, wie oben beschrieben, weiterverfahren, was in Fig. 9 dargestellt ist. Hier sind nunmehr die Volumendaten der Blöcke B-3.14 und B-3.16 durch die Volumendaten des zugehörigen Blocks B-2.4 der nächst höheren Unterteilungsebene ersetzt worden. Denn die Volumendaten der Blöcke B-3.14 und B-3.16 sind die nunmehr am weitesten vom Betrachter 14 entfernten Blöcke der Unterteilungsebene -3. Da zwei Blöcke der Unterteilungsebene -3 durch einen Block der Unterteilungsebene -2 ersetzt werden, reduziert sich die Gesamtvolumendatenmenge um die Volumendaten eines Blocks.

In der Fig. 9 hätte man grundsätzlich auch die Blöcke B-2.5 und B-2.7 der Unterteilungsebene -2 durch den diese Blöcke mitumfassenden Block B-1.2 der Unterteilungsebene -1 ersetzen können. Allerdings hätte man dann Blöcke für die Darstellung der Ebene 10 benötigt, deren Volumendaten sich durch zwei Auflösungsstufen voneinander unterscheiden. Dies kann unerwünschte Effekte bei der Darstellung der Ebene 10 haben, weshalb in diesem Ausführungsbeispiel (und auch bei den anderen Ausführungsbeispielen) davon ausgegangen wird, dass die für die Darstellung einer Ebene benötigten Blöcke Volumendaten mit insgesamt maximal 2 benachbarten Auflösungsstufen umfassen.

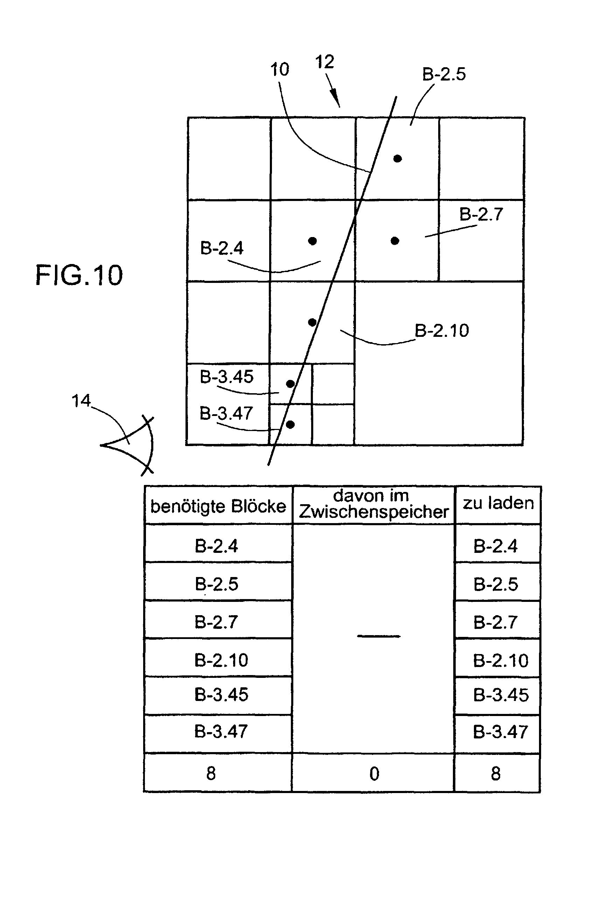

Wie man anhand von Fig. 9 erkennen kann, sind immer noch zu viele Blöcke, nämlich acht, nachzuladen. Daher wird im nächsten Schritt (siehe Fig. 10) anstelle der drei Blöcke B-3.38 bis B-3.40 der diese umfassende Block B-2.10 der nächst höheren Unterteilungsebene verwendet. Damit reduziert sich die Gesamtzahl an benötigten Blöcken um 3 (gegenüber dem Schritt gemäß Fig. 9), es sind aber immer noch sechs Blöcke nachzuladen.

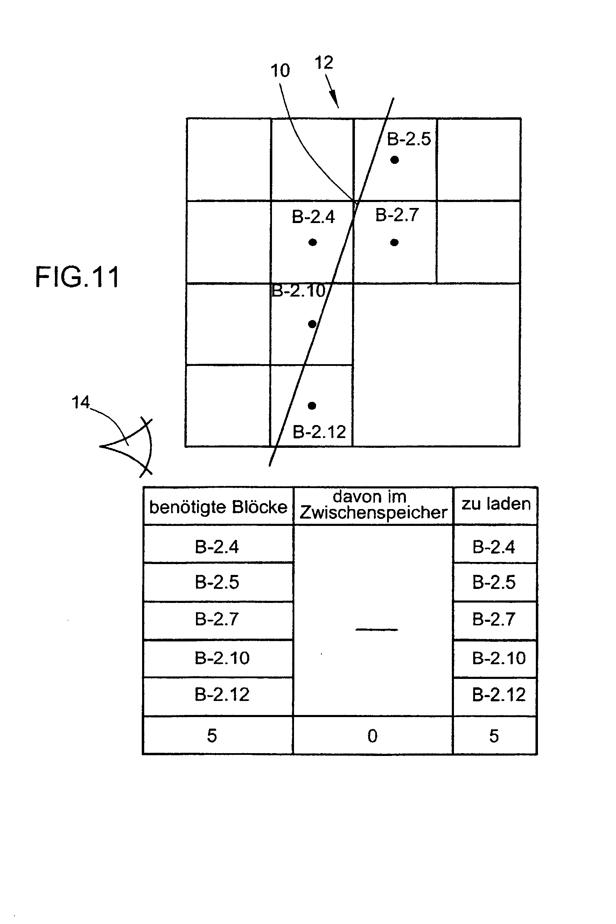

Daher wird nun im nächsten Schritt (siehe Fig. 11) der Block B-2.12 eingeführt, der die beiden Blöcke B-3.45 und B-3.47 ersetzt. Somit lässt sich nunmehr die Anzahl an benötigten Blöcken auf fünf reduzieren, von denen bisher keiner im Zwischenspeicher gespeichert ist. Mit anderen Worten müssen also fünf Blöcke nachgeladen werden, womit exakt die maximale Anzahl an in einem Ladeintervall ladbaren Blöcken erreicht ist. Die in der Tabelle der Fig. 11 aufgeführten Blöcke werden also nun in den Zwischenspeicher geladen und anhand dieser Blöcke dann die Ebene 10 dargestellt.

Wie man durch einen Vergleich der Fign. 11 und 5 erkennen kann, war die Situation gemäß Fig. 11 bereits im Schritt gemäß Fig. 5 gegeben. Zur Abkürzung des Verfahrens hätte man also auch direkt ausgehend von der Situation gemäß Fig. 5 entscheiden können, die fünf erforderlichen Blöcke in den Zwischenspeicher zu laden. Dies ist sicherlich in manchen Fällen sinnvoll und bezüglich einer möglichst schnellen Erstellung der für die Darstellung der Ebene 10 benötigten Blöcke vorteilhaft. Allerdings ist es zweckmäßig, zunächst danach zu streben, dass die maximale Anzahl an in den Zwischenspeicher speicherbaren Blöcken für die Darstellung der Ebene ausgeschöpft wird, um danach erst zu prüfen, wie viele von diesen Blöcken nachzuladen sind. Denn auf diese Weise wird garantiert, dass die für die Darstellung relevanteren Volumendaten in einer feineren Auflösung vorliegen als die weniger relevanten.

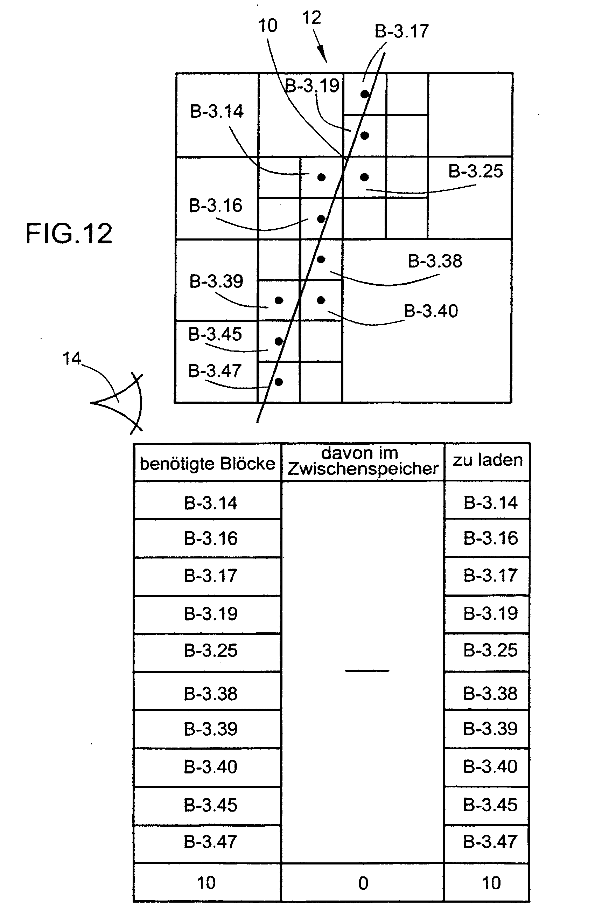

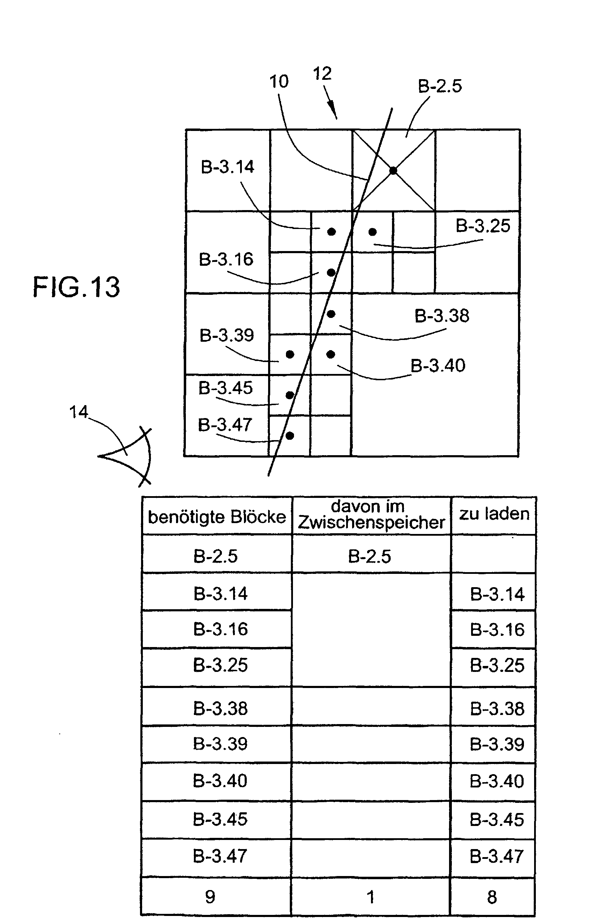

Nachdem also im letzten Schritt (Fig. 11) fünf Blöcke geladen und auf der Grundlage der Volumendaten dieser fünf Blöcke die Ebene 10 dargestellt wurde, werden im nächsten Schritt gemäß Fig. 12 sämtliche Blöcke der zweiten Unterteilungsebene in Blöcke der nächst kleineren Unterteilungsebene unterteilt. Dann wird wiederum untersucht, wie viele Blöcke jetzt für die Darstellung benötigt werden. In diesem Fall sind es wieder zehn Blöcke der Unterteilungsebene -3. Da zehn Blöcke mehr als die gleichzeitig im Zwischenspeicher speicherbare Anzahl an Blöcken ist, muss, wie in Fig. 13 dargestellt, wiederum mit einer Rückführung der Unterteilung begonnen werden, und zwar für Volumendaten, die am weitesten vom Betrachter 14 entfernt sind. Mit anderen Worten werden also die beiden Blöcke B-3.17 und B-3.19 ersetzt durch den Block B-2.5 der Unterteilungsebene 2, wodurch sich die Gesamtanzahl an benötigten Blöcken um einen reduziert. Damit ist die erste Bedingung erfüllt. Von den nunmehr neun benötigten Blöcken befindet sich bereits einer, nämlich der Block B-2.5 im Zwischenspeicher (dieser Block ist in Fig. 13 mit X gekennzeichnet; für Fig. 13 sowie für sämtliche übrige Fign. gilt, dass bereits im Zwischenspeicher geladene und für eine Darstellung einer Ebene benötigte Blöcke durch Durchkreuzen als im Zwischenspeicher bereits gespeichert symbolisiert sind), so dass insgesamt acht Blöcke nachzuladen sind. Dies verstößt gegen die zweite Bedingung, wonach lediglich fünf Blöcke in einem Ladeintervall geladen werden können.

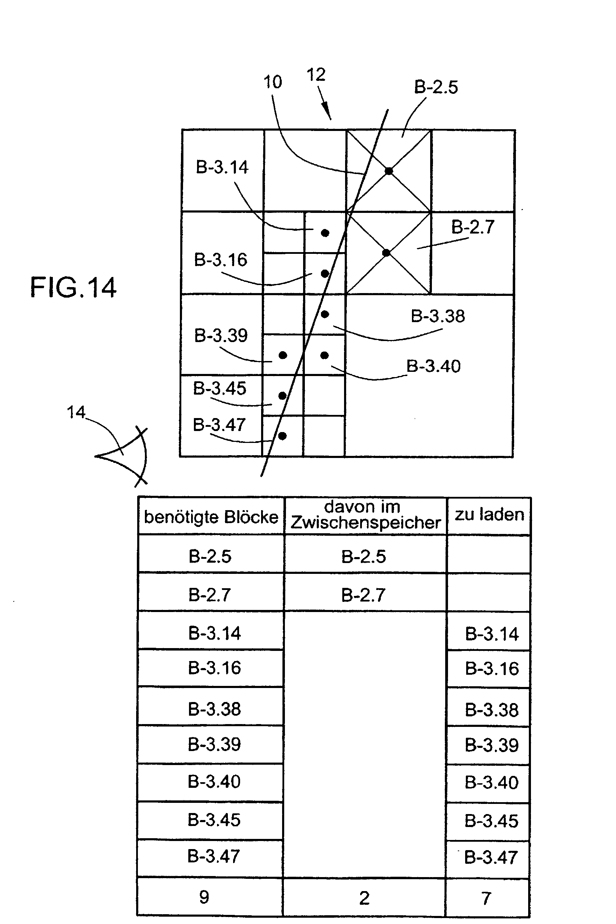

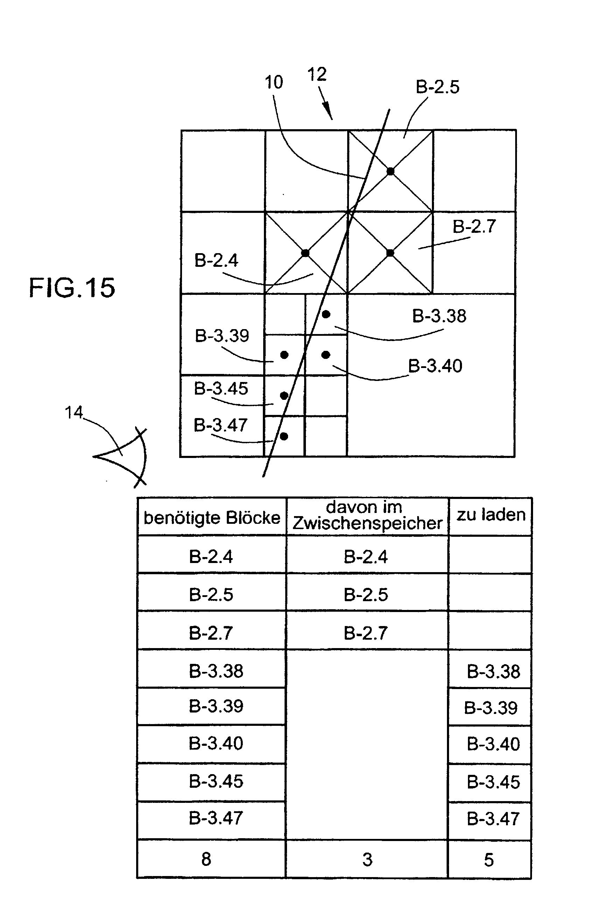

Deshalb wird im nächsten Schritt (Fig. 14) der nunmehr am weitesten vom Betrachter 14 entfernt liegende Block B-3.25 der Unterteilungsebene -3 in den zugehörigen Block B-2.7 der Unterteilungsebene -2 umgesetzt wird. Abgesehen davon, dass dies zu keiner Reduktion der für die Darstellung der Ebene 10 benötigten Blöcke führt, wird erreicht, dass nun von den benötigten Blöcken bereits zwei, nämlich die Blöcke B-2.5 und B-2.7 im Zwischenspeicher gespeichert sind. Damit müssen noch sieben Blöcke nachgeladen werden. Dies ist noch zu viel, weshalb im nächsten Schritt gemäß Fig. 15 nunmehr die beiden am weitesten von Betrachter 14 entfernten Blöcke B-3.14 und B-3.16 der Unterteilungsebene -3 in den zugehörigen Block B-2.4 der Unterteilungsebene -2 umgesetzt werden. Damit sind jetzt von den acht benötigten Blöcken drei im Zwischenspeicher gespeichert, mithin also noch fünf nachzuladen. Damit ist die Nachladebedingung erfüllt und es werden die Blöcke B-3.38 bis B-3.40, B-3.45 und B-3.47 in den Speicher geladen.

Ausgehend von der Situation gemäß Fig. 11 kann man zu der Situation gemäß Fig. 15 auch dadurch kommen, dass man zunächst den zum Betrachter 14 nächstliegenden Block B-2.12 in die beiden zugehörigen Blöcke der nächsten Unterteilungsebene unterteilt. Für die Darstellung würde man dann sieben Blöcke benötigen, was weniger als die maximale Anzahl gleichzeitig im Zwischenspeicher gespeicherter Blöcke ist. Demzufolge unterteilt man dann in einem nächsten Schritt den nunmehr dem Betrachter 14 nächstliegenden Block B-2.10 der Unterteilungsebene -2 in die zugehörigen in diesem Fall drei Blöcke der Unterteilungsebene -3. Damit erhöht sich die Anzahl an für die Darstellung der Ebene 10 benötigten Blöcke auf 3 und es ergibt sich die Situation gemäß Fig. 15.

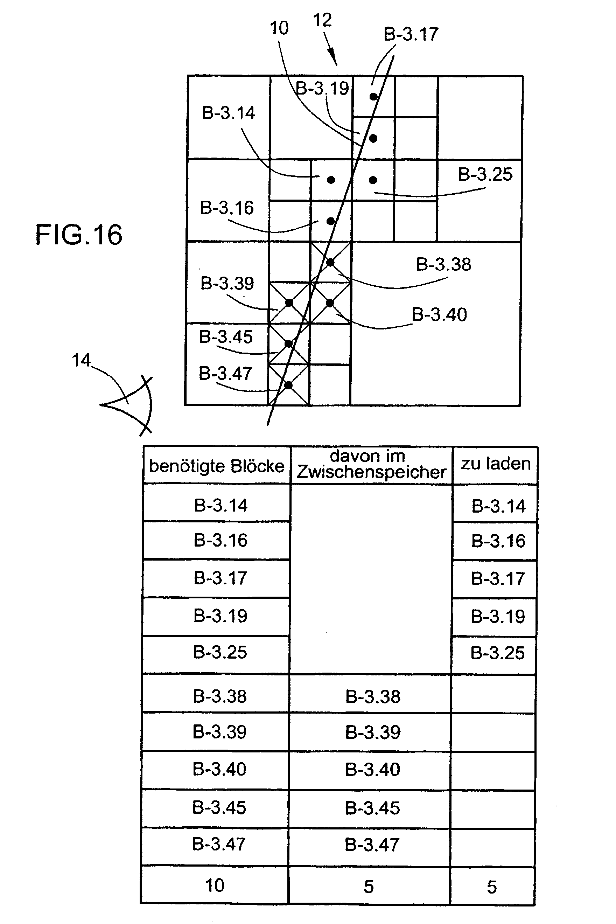

Im nächsten Schritt gemäß Fig. 16 werden nun die drei Blöcke der Unterteilungsebene -2, die gemäß Fig. 15 noch vorhanden sind, aufgeteilt in die entsprechenden Blöcke der Unterteilungsebene -3. Damit ergibt sich, dass nunmehr wiederum zehn Blöcke für die Darstellung der Ebene 10 benötigt werden. Von diesen zehn Blöcken sind die mit "X" gekennzeichneten bereits im Zwischenspeicher gespeichert, so dass noch fünf Blöcke nachzuladen sind. Dies spielt zum gegenwärtigen Zeitpunkt aber keine Rolle, da leider zehn und damit mehr als die zulässige Maximalanzahl an Blöcken für die Darstellung benötigt wird.

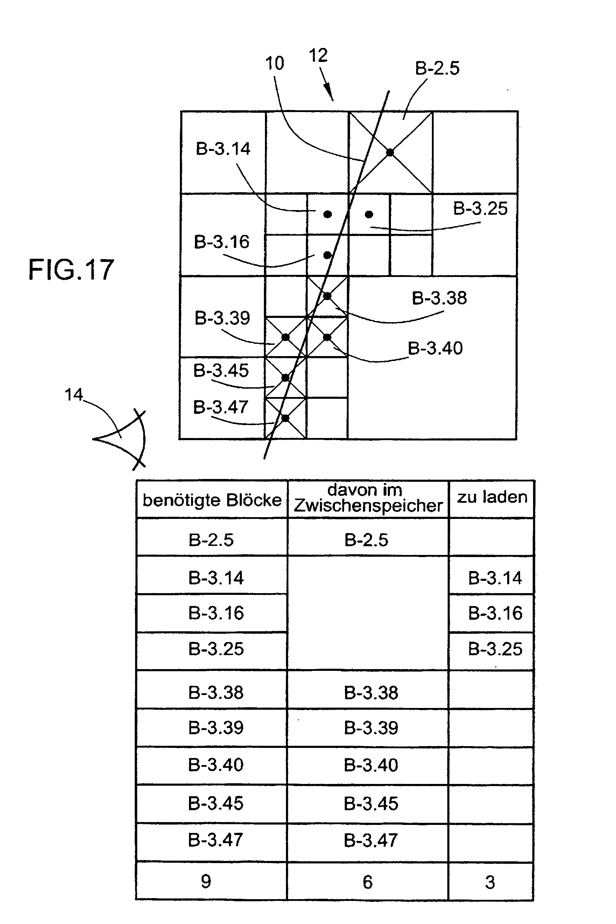

In Fig. 17 sind wiederum die beiden am weitesten vom Betrachter 14 entfernt liegenden Blöcke der Unterteilungsebene -3 in den zugehörigen Block der Unterteilungsebene -2 umgesetzt worden. Von den nunmehr neun benötigten Blöcken sind die in der Tabelle angegebenen und in Fig. 17 symbolisierten Blöcke bereits im Zwischenspeicher gespeichert, so dass insgesamt noch drei Blöcke nachzuladen sind. Dies ist in einem Ladeintervall möglich, so dass jetzt die Blöcke B-3.14, B-3.16 und B-3.25 geladen werden.

In Schritt 18 wird dann nochmals versucht, ob der vom Betrachter 14 am weitesten entfernt liegende Bereich in der Ebenendarstellung noch feiner aufgelöst darstellbar ist. Zu diesem Zweck wird der Block B-2.5 durch die entsprechenden Blöcke der nächst niedrigeren Unterteilungsebene ersetzt. Von diesen vier Blöcken werden zwei für die Darstellung benötigt, so dass nun insgesamt wiederum zehn Blöcke benötigt werden, was wiederum zu viel ist. Daher wird im Schritt 19 die zuvor genommene Unterteilung wieder zurückgeführt. Von den nunmehr neun benötigten Blöcken sind sämtliche neun im Zwischenspeicher gespeichert, so dass keiner nachgeladen werden muss.

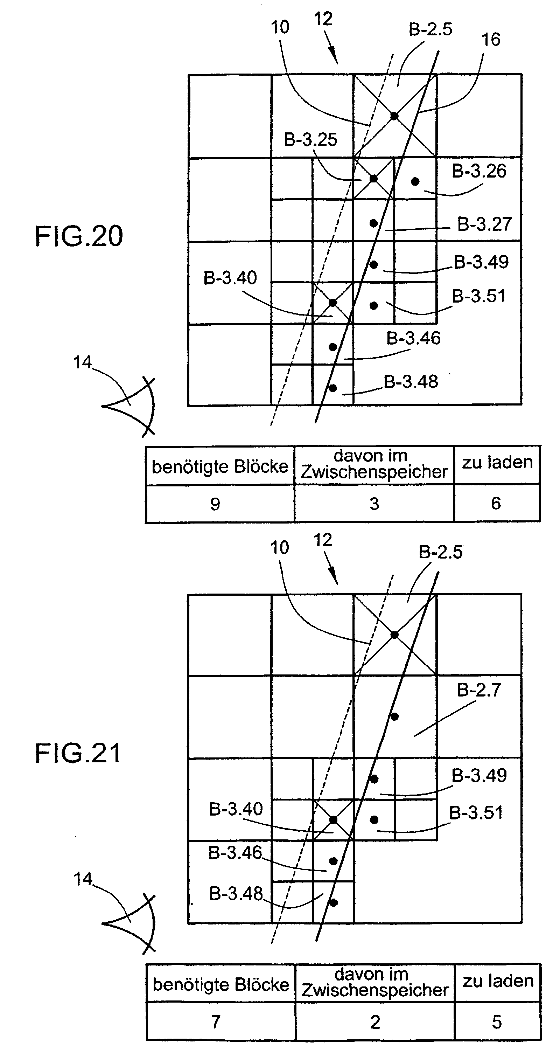

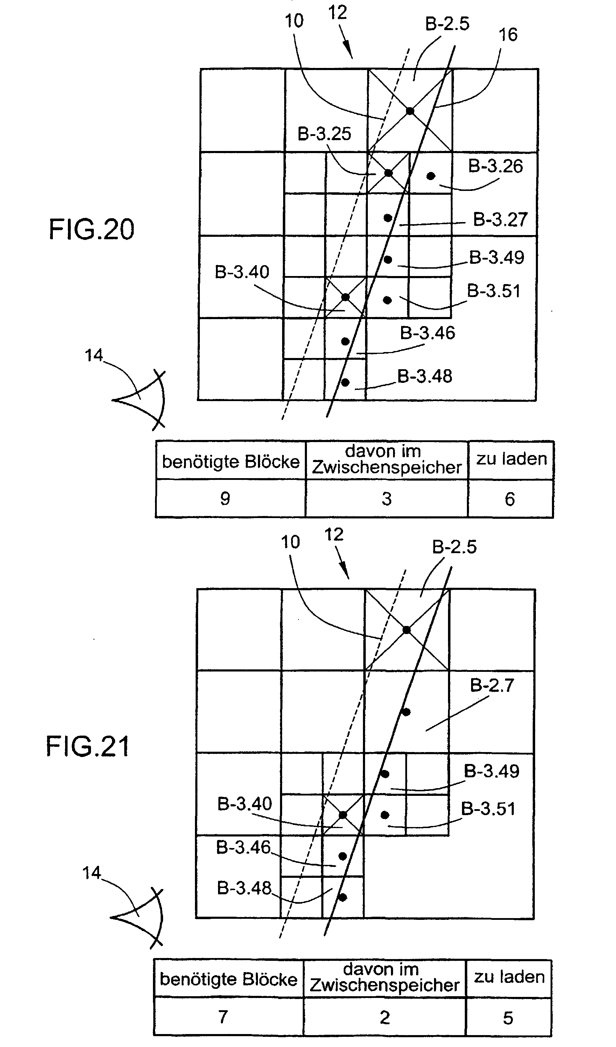

Die zuvor beschriebene Erläuterung des erfindungsgemäßen Verfahrens gemäß diesem Ausführungsbeispiel geht davon aus, dass sich die darzustellende Ebene nicht verschiebt. Damit zeigt dieses Beispiel, wie eine Ebene, die anfänglich noch relativ grob aufgelöst dargestellt ist, immer feiner aufgelöst darstellbar ist. Sollte sich die zu betrachtende Ebene verschieben, so sind letztendlich die gleichen Mechanismen, wie zuvor beschrieben, erforderlich. Die Verschiebung der Ebene macht es erforderlich, dass in weitaus weniger starkem Umfang für die Darstellung der verschobenen Ebene (neue Ebene) auf die Volumendaten zurückgegriffen werden kann, die bereits für die Darstellung der vorherigen Ebene (alte Ebene) benötigt wurden. Ein Beispiel für die Ebenenverschiebung ist in den Fign. 20 bis 25 angegeben. Die Ebene 16 stellt die neue Ebene dar, während in Fig. 20 beispielsweise noch die alte Ebene 10 mit eingezeichnet ist. Für die Darstellung der Ebene 16 werden die in Fig. 20 durch "X" symbolisierten und in der Tabelle aufgeführten Blöcke benötigt. Es sind hier neun Blöcke erforderlich, von denen bereits drei im Zwischenspeicher gespeichert sind. Mithin müssten also noch sechs nachgeladen werden. Da dies zu viel ist, werden nun wiederum nach dem zuvor beschriebenen Muster diejenigen Blöcke der Unterteilungsebene -3, die am weitesten entfernt von dem Betrachter 14 sind, durch den zugehörigen Block der Unterteilungsebene -2 ersetzt. Damit reduziert sich die Menge an für die Darstellung erforderlichen Volumendaten auf sieben Blöcke, von denen zwei bereits im Zwischenspeicher gespeichert sind. Die verbleibenden fünf Blöcke können nun in einem Ladeintervall gleichzeitig geladen werden. Danach erfolgt die Darstellung der Ebene 16.

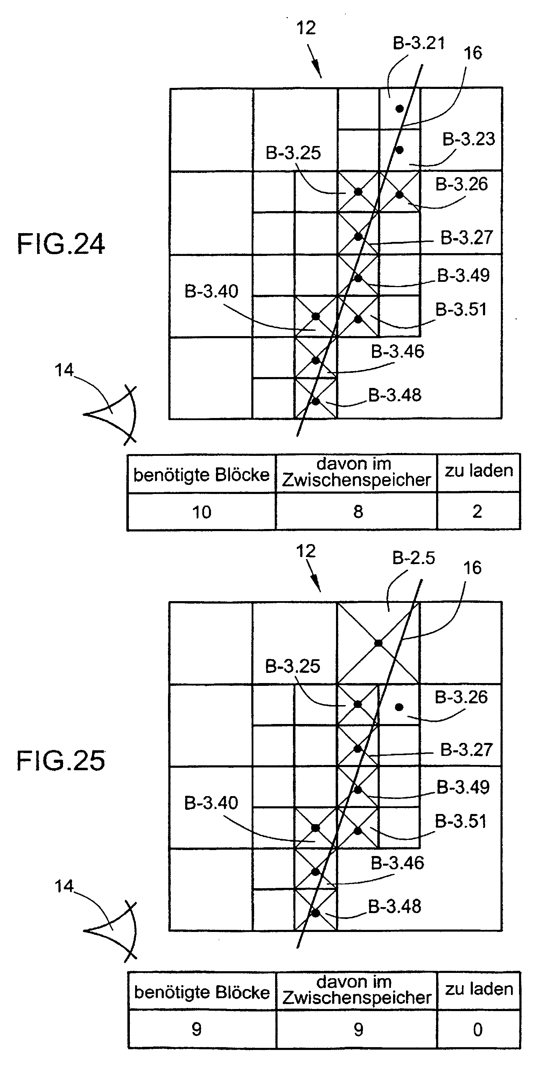

Unterstellt den Fall, dass die Ebene 16 nicht weiterbewegt wird, kann nun wiederum deren Darstellung feiner aufgelöst erfolgen. Dies erfolgt wiederum dadurch, dass gemäß Fig. 22 untersucht wird, welche der Blöcke der nächst niedrigeren Unterteilungsebene für die Darstellung der Ebene 16 erforderlich sind. Dies sind insgesamt zehn, wonach mehr Speicherplatz als im Zwischenspeicher vorhanden erforderlich ist. Daher werden im Schritt gemäß Fig. 23 wiederum im vom Betrachter 14 entferntesten Bereich der Volumendaten die beiden Blöcke B-3.18 und B-3.20 durch den Block B-2.5 ersetzt. Damit werden nun neun Blöcke für die Darstellung der Ebene 16 benötigt, von denen sechs bereits im Zwischenspeicher geladen sind, so dass noch drei nachzuladen sind. Anschließend wird dann gemäß Fig. 24 noch versucht, die Darstellung im vom Betrachter 14 am weitesten entfernten Bereich zu verfeinern. Dies scheitert aber letztendlich daran, dass für eine derartige Darstellung dann mehr Blöcke, nämlich zehn, benötigt werden, als der Zwischenspeicher fassen kann. Die in Fig. 24 vorgenommene Unterteilung in die Blöcke der Unterteilungsebene -3 wird in Fig. 25 also wieder zurückgeführt. Damit ist der Aufbau der Darstellung der Ebene 16 abgeschlossen.

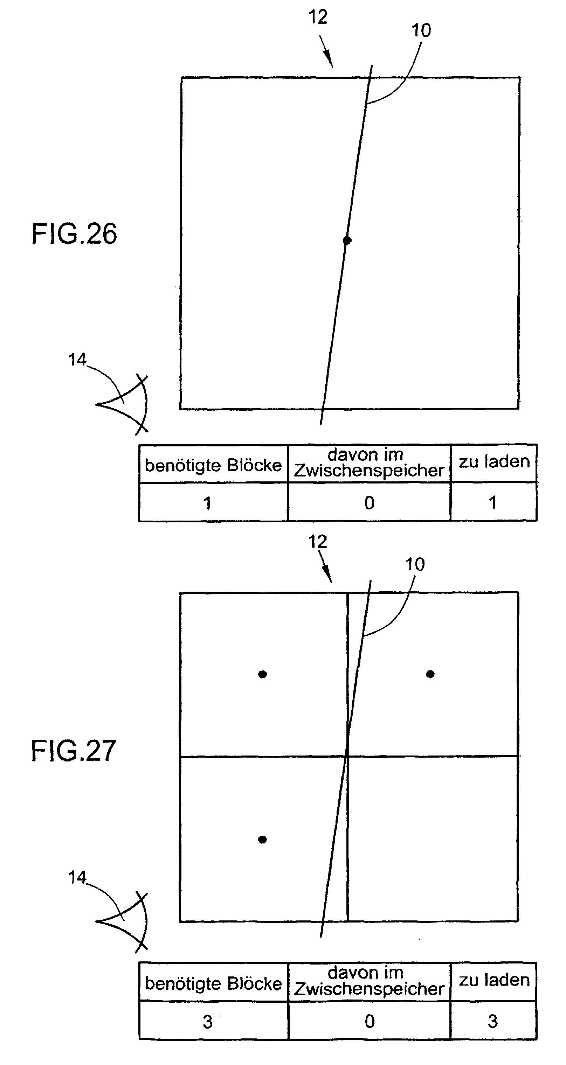

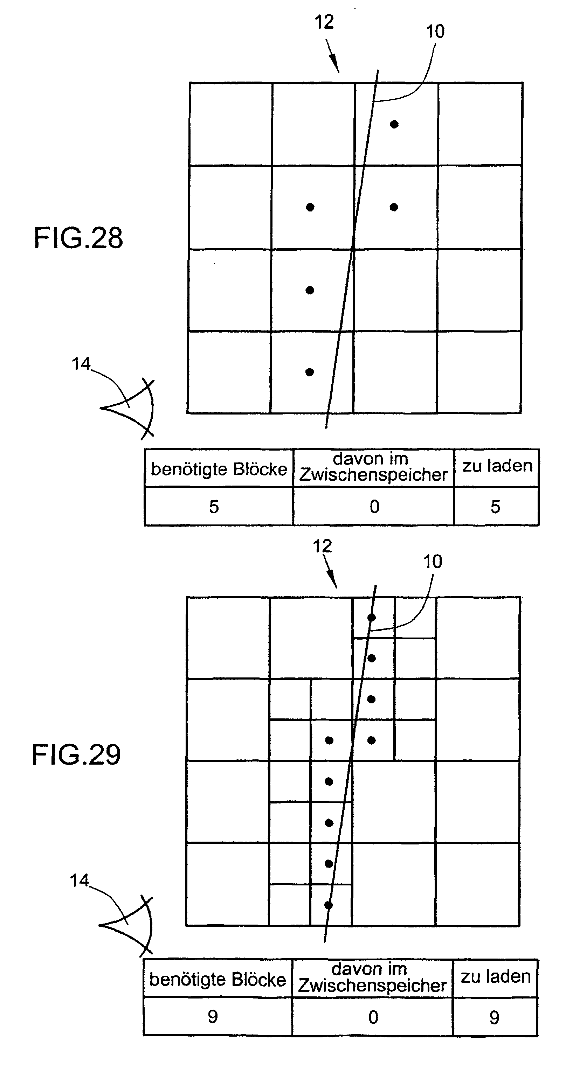

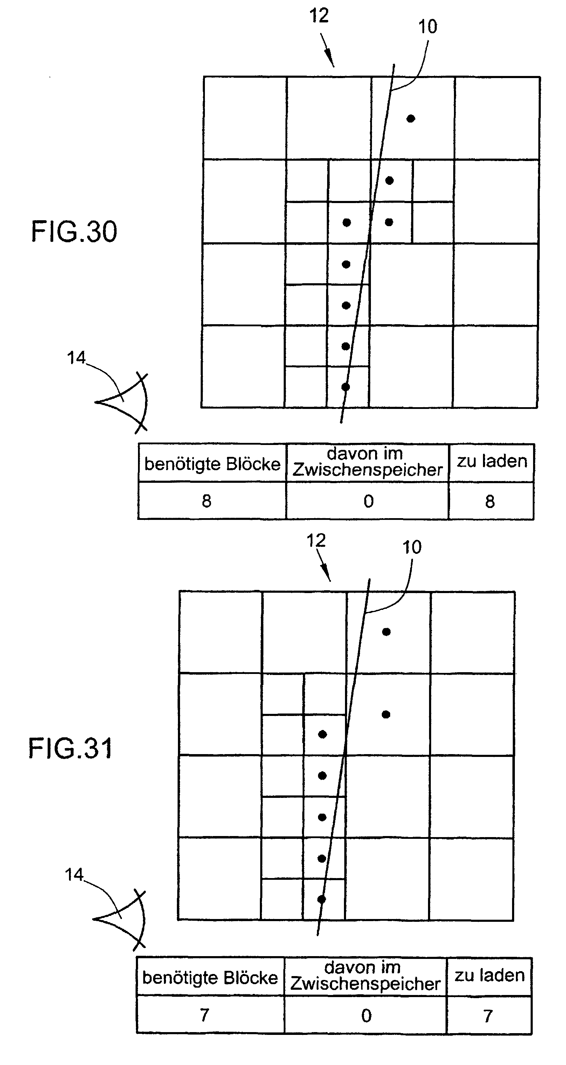

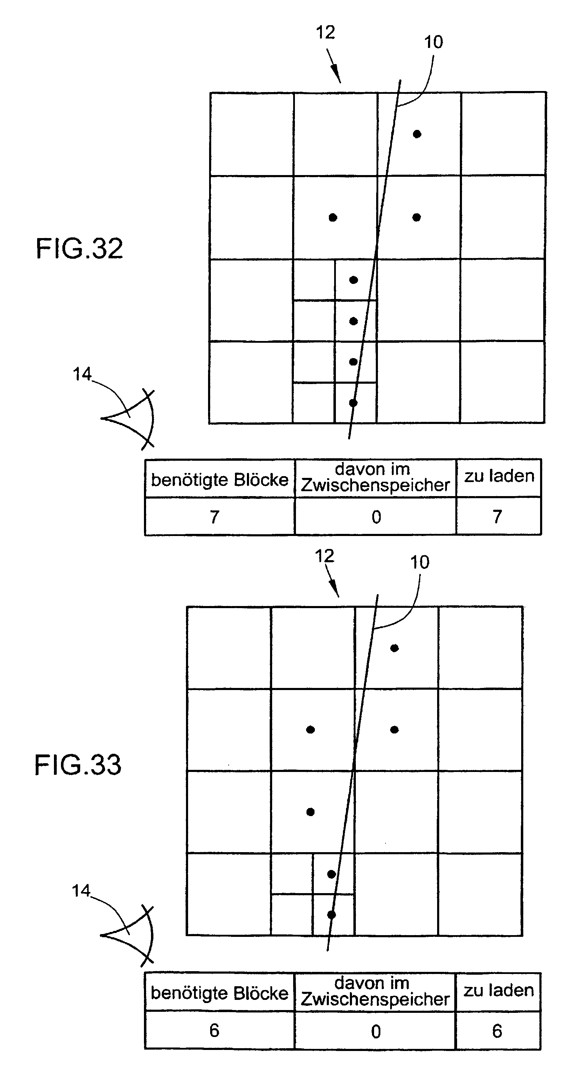

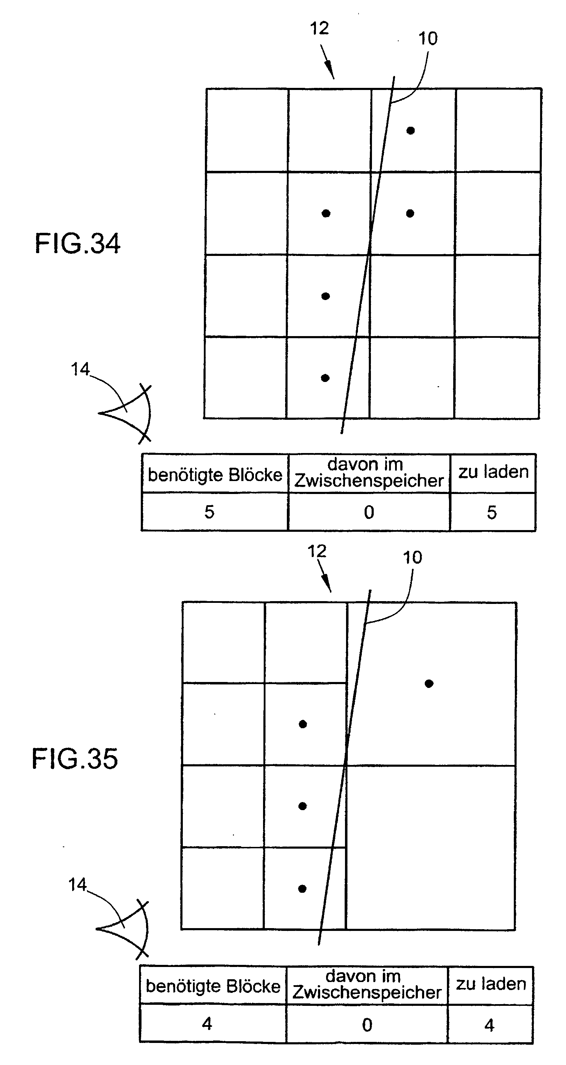

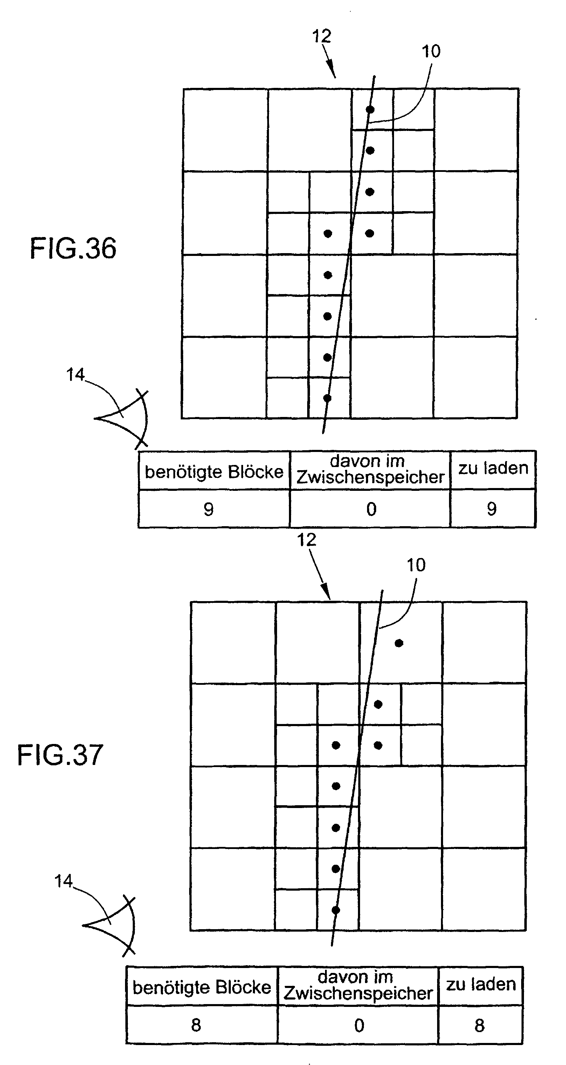

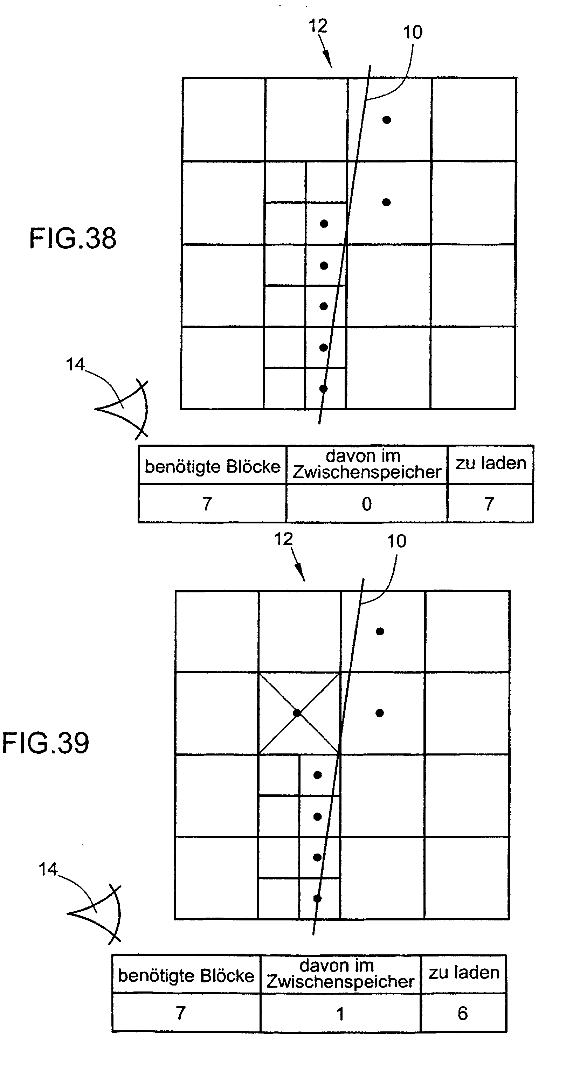

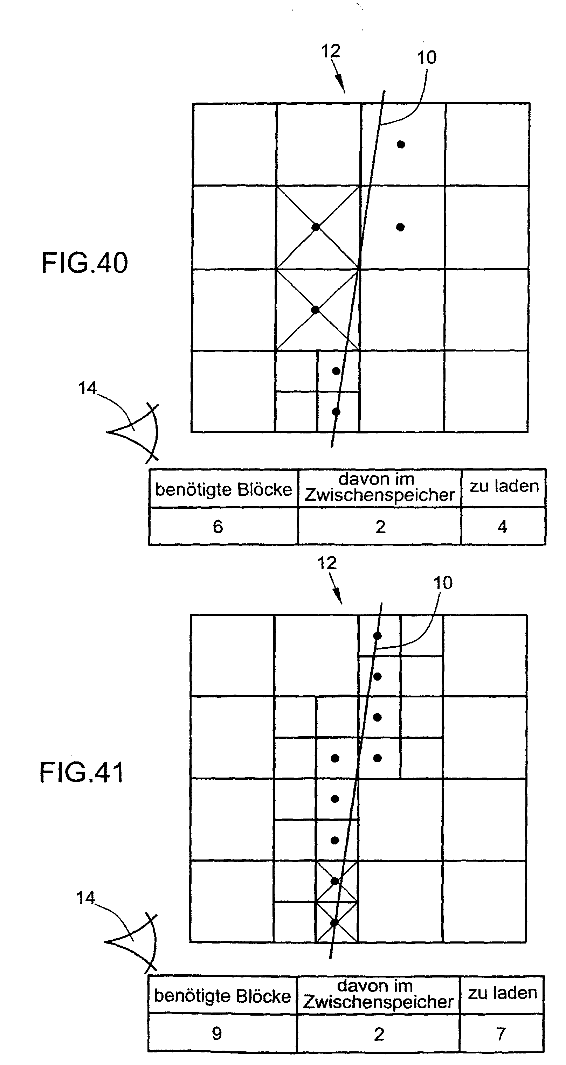

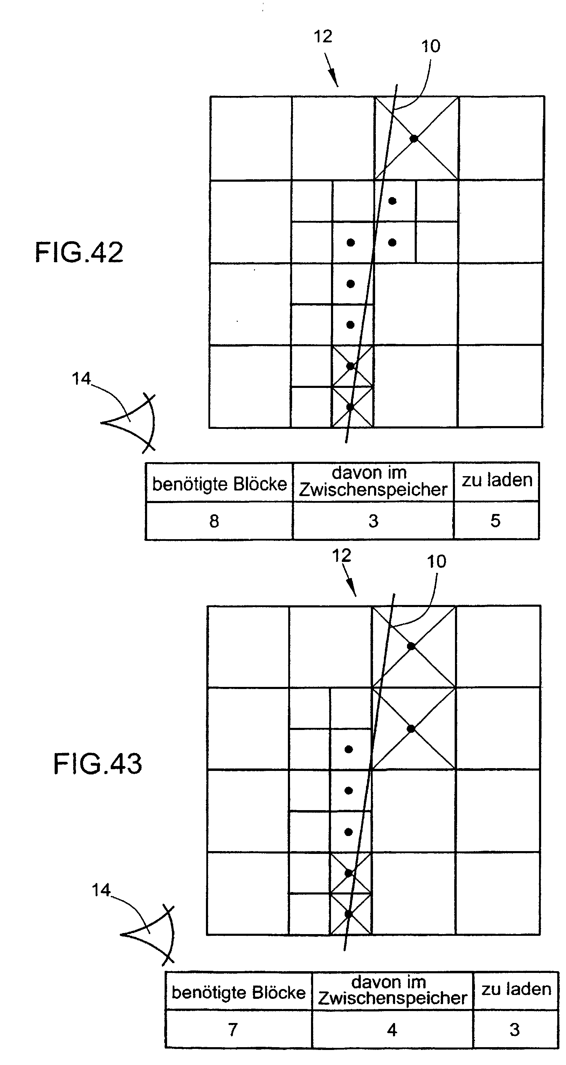

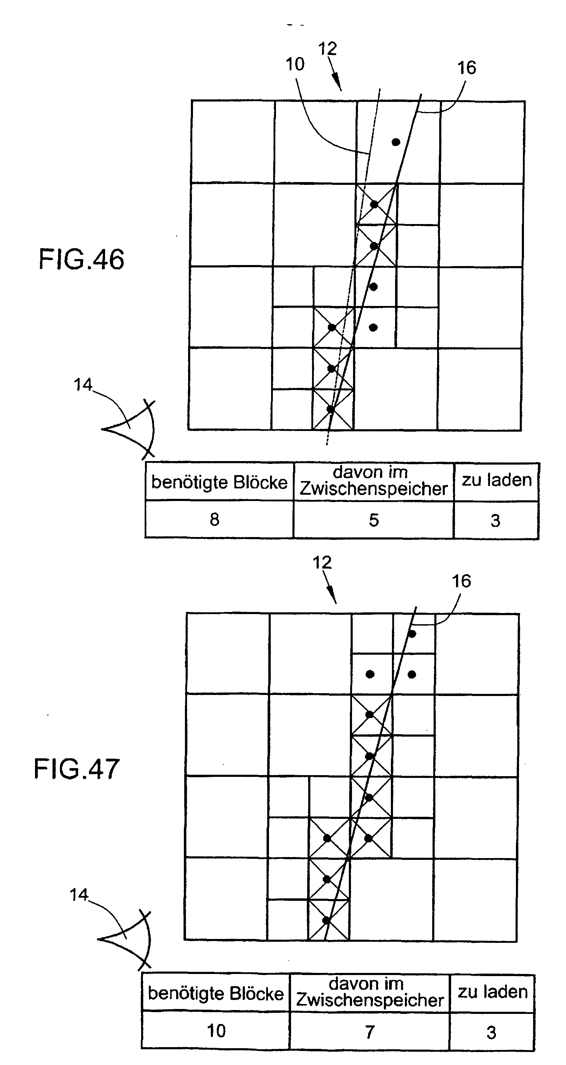

In den Fign. 26 bis 48 ist ein zweites Ausführungsbeispiel des Aufbaus einer Ebenendarstellung in einem Volumendatensatz sowie der Gegebenheiten beim Verdrehen dieser Ebene wiedergegeben. In den in diesen Fign. aufgeführten Tabellen sind lediglich noch die Anzahl der für die Darstellung jeweils benötigten Blöcke, die Anzahl der davon bereits im Speicher gespeicherten Blöcke und die Anzahl der noch zu ladenden Blöcke angegeben. Es wird wieder davon ausgegangen, dass der Speicher zu Beginn noch leer ist. Als Voraussetzung gilt wiederum, dass in dem Zwischenspeicher maximal neun Blöcke einlagerbar sind. Im Unterschied zu dem zuvor beschriebenen Ausführungsbeispiel jedoch ist die Laderate auf vier Blöcke begrenzt. Bereits geladene Blöcke, die auch für die Darstellung der Ebene in den einzelnen Schritten des Verfahrens erforderlich sind, sind wiederum durchkreuzt, d.h. mit einem "X" versehen. Soweit verwendet, sind die Bezugszeichen in den Fign. 26 bis 48 identisch mit den Bezugszeichen in den Fign. 3 bis 25.

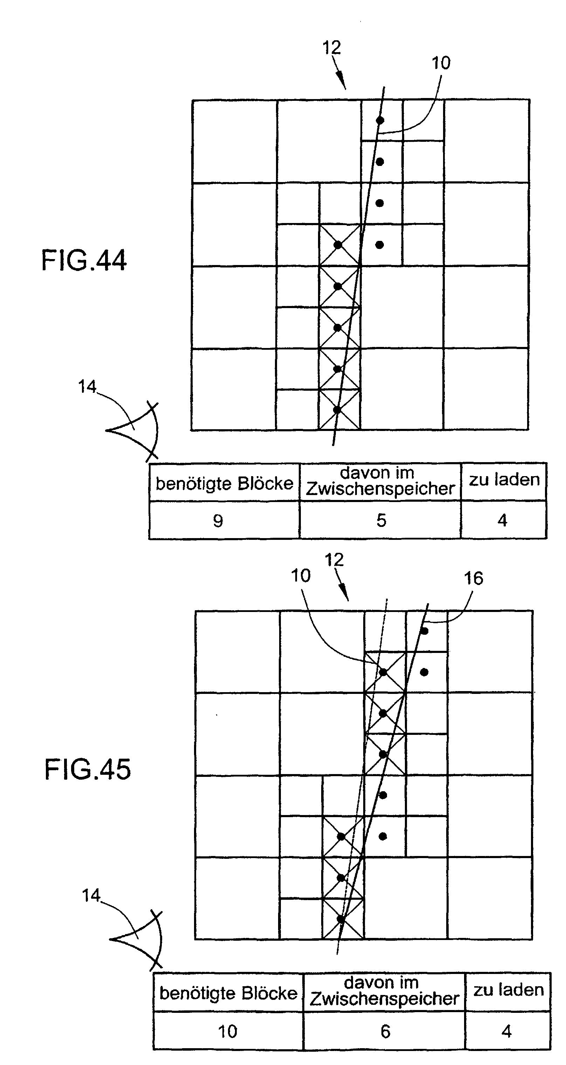

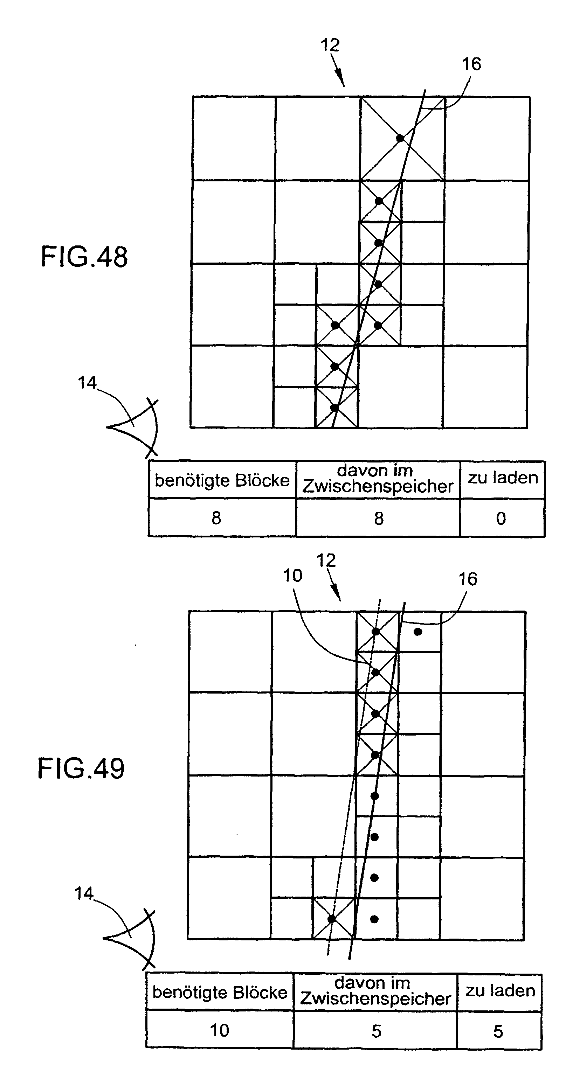

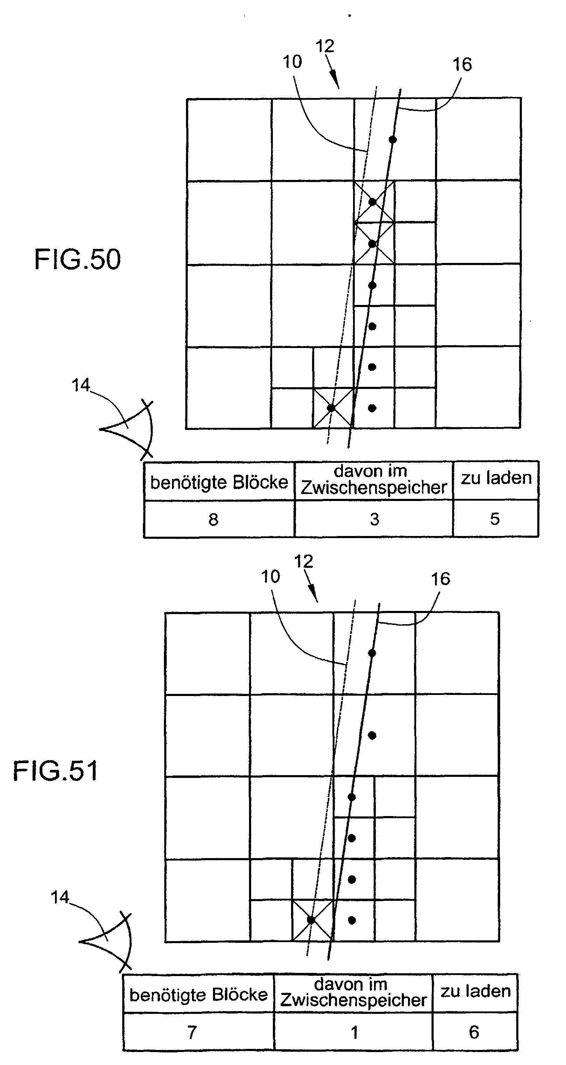

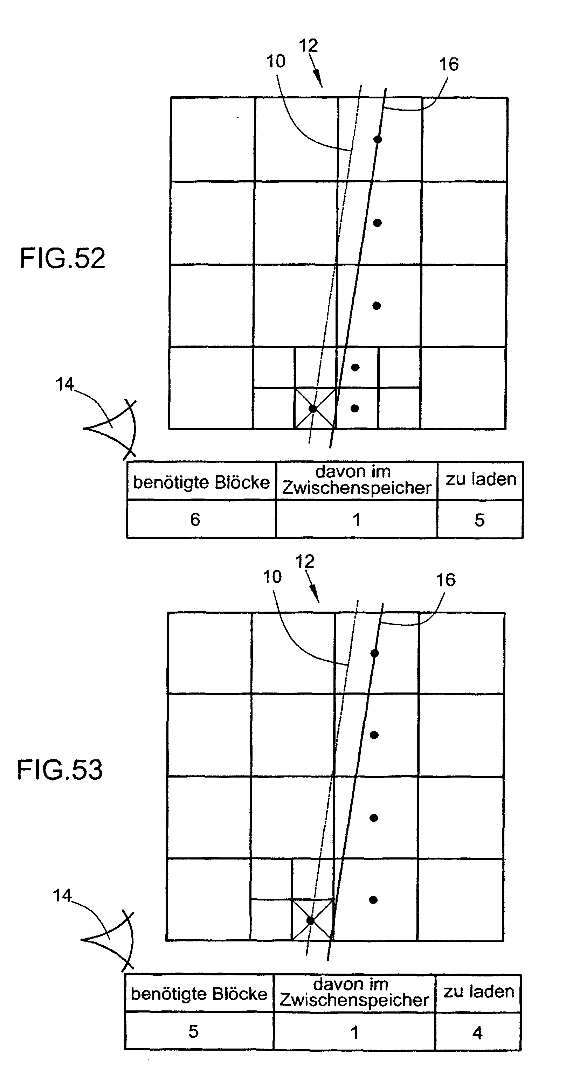

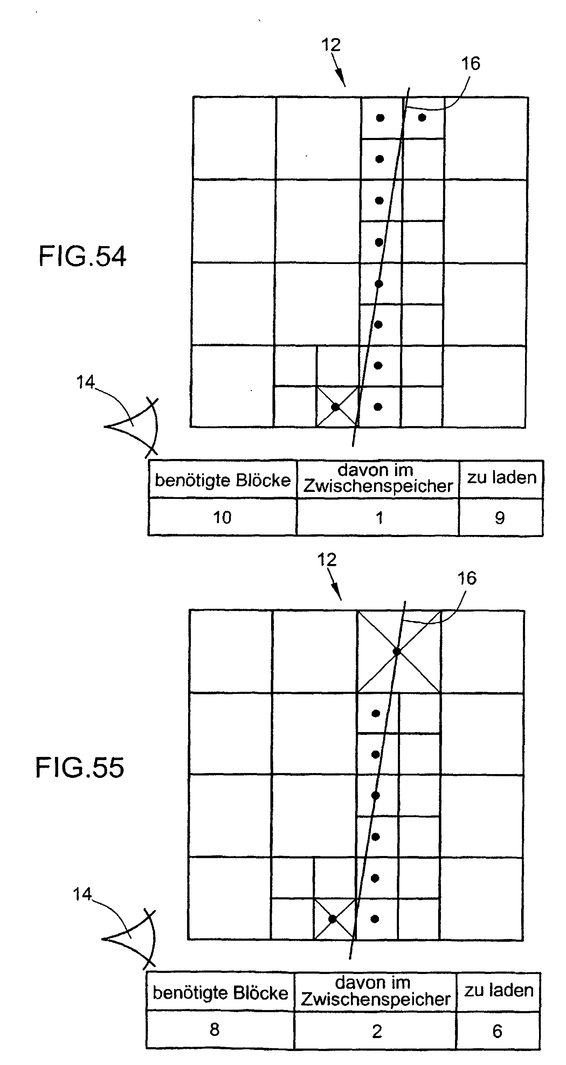

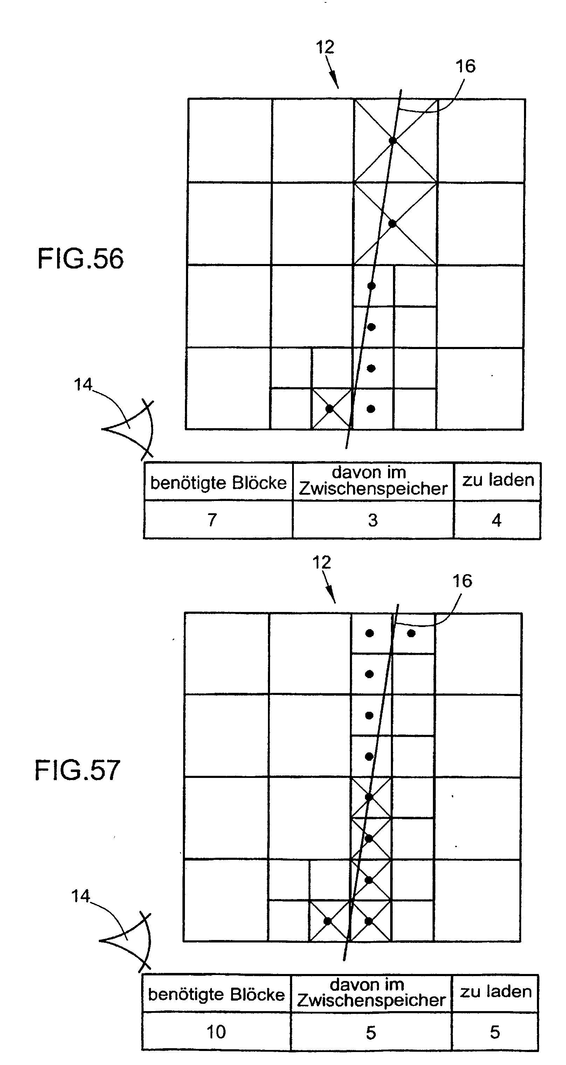

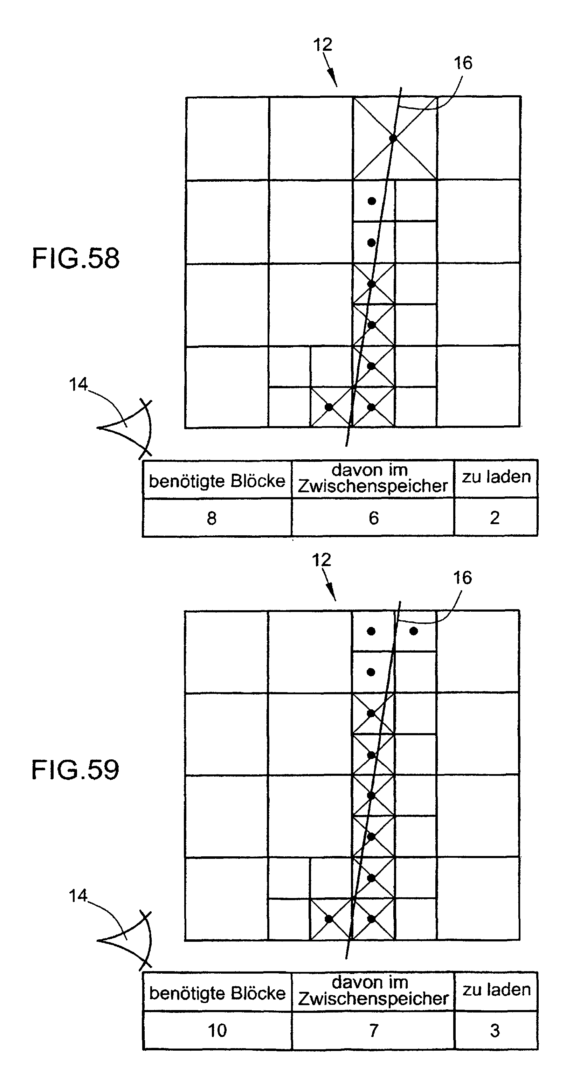

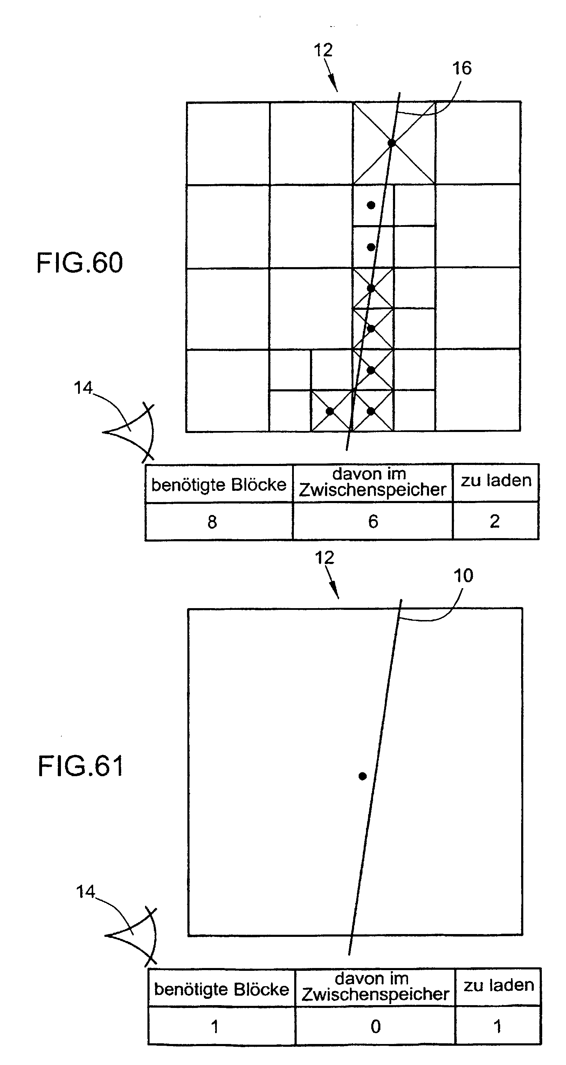

Eine Alternative zur Drehung der Ebene gemäß den Fign. 45 bis 48 ist in den Fign. 49 bis 60 wiedergegeben. Auch für diese Fign. gilt das oben gesagte bezüglich der Darstellungsweise und der Bezugszeichenverwendung. Bei dem Ausführungsbeispiel gemäß den Fign. 49 bis 60 wird die Ebene 10 parallel verschoben, und zwar um lediglich ein recht kurzes Stück. Die Randbedingungen sind, dass wiederum maximal neun Blöcke gleichzeitig im Zwischenspeicher gespeichert sein können und dass maximal vier Blöcke in einem Ladeintervall geladen werden können. Nachdem die verschobene Ebene 16 das erste mal dargestellt worden ist (siehe die Situation in Fig. 53), wird, wie im Ausführungsbeispiel gemäß den Fign. 26 bis 48 davon ausgegangen, dass die Ebene nun nicht weiterbewegt wird, sich also in der Darstellung von einer recht groben Auflösung zu einer recht feinen Auflösung hin aufbauen lässt. Die für die Darstellung der verschobenen Ebene 16 in ihrer größtmöglichen Auflösung erforderlichen Blöcke ergeben sich aus Fig. 60.

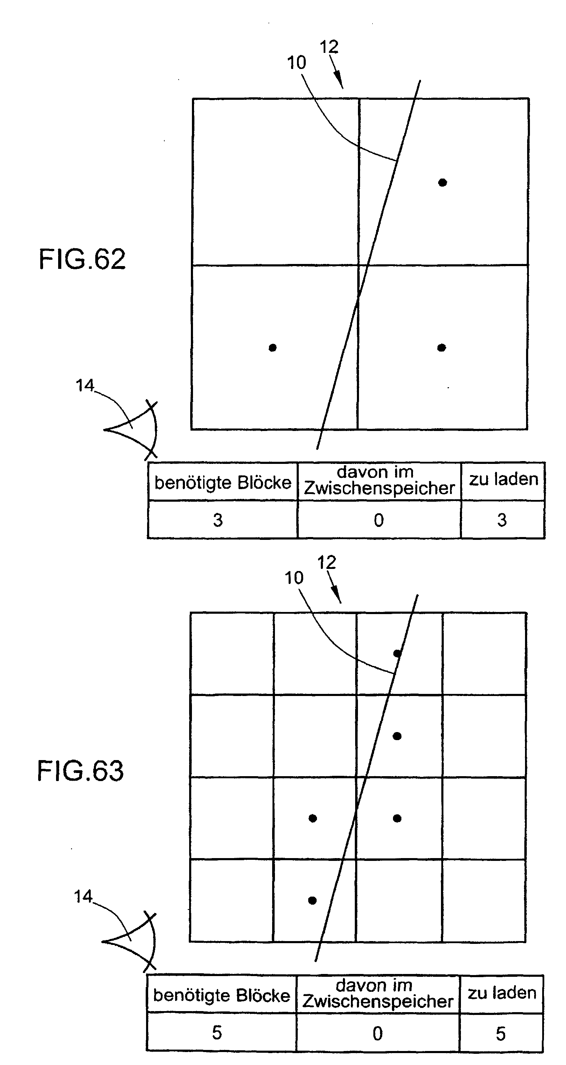

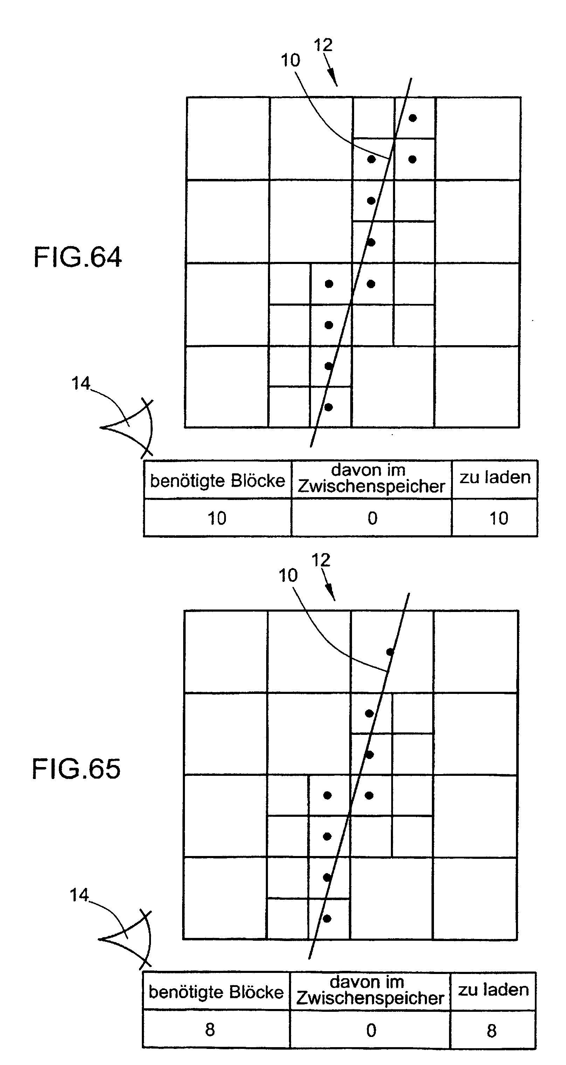

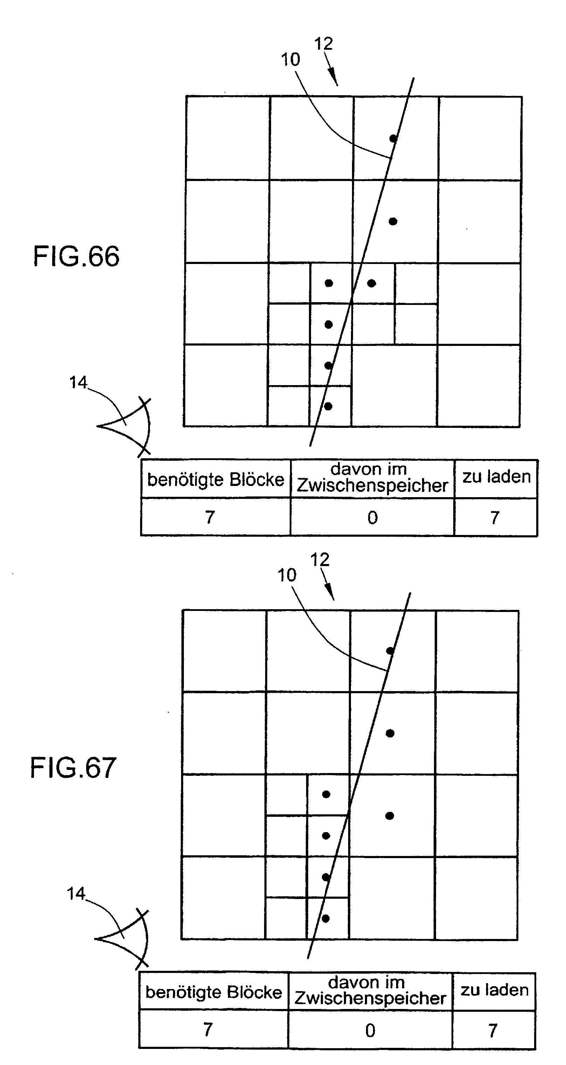

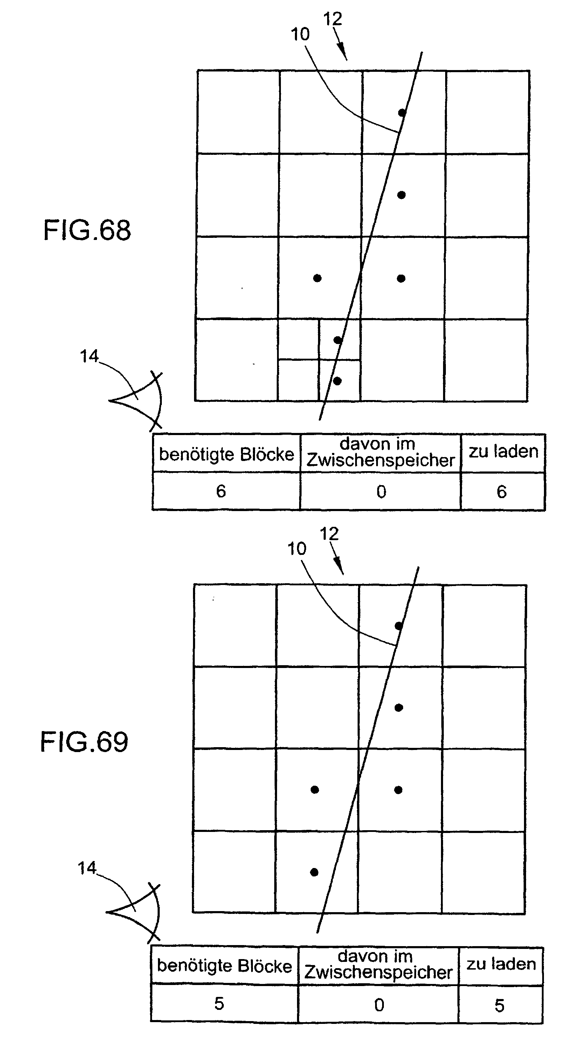

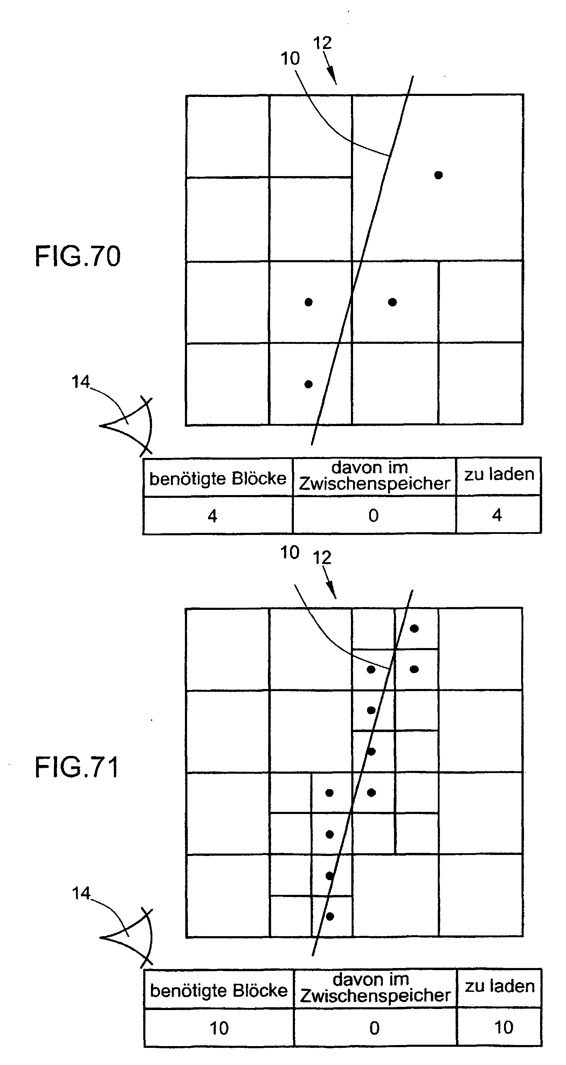

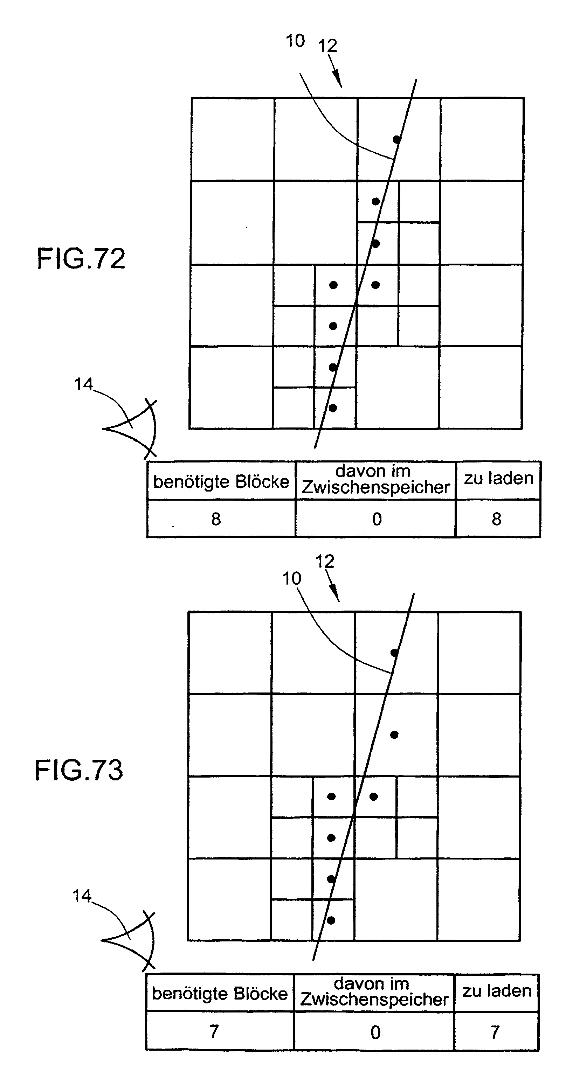

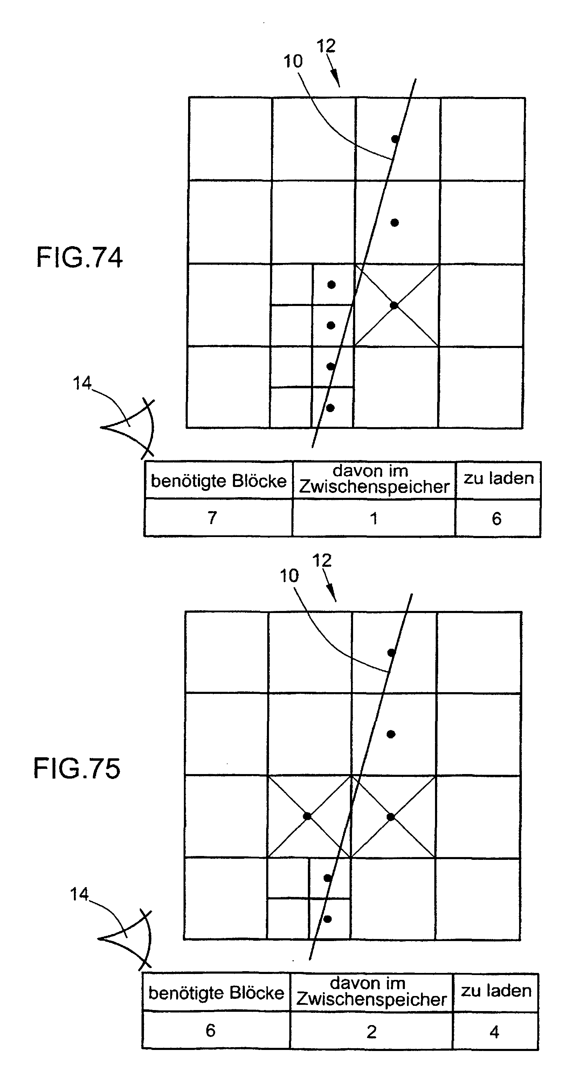

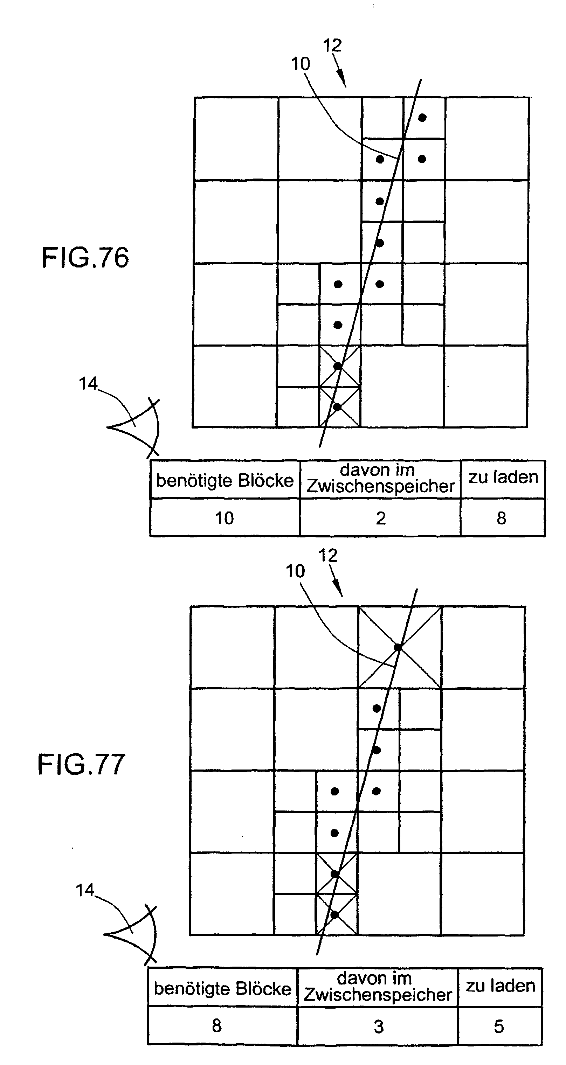

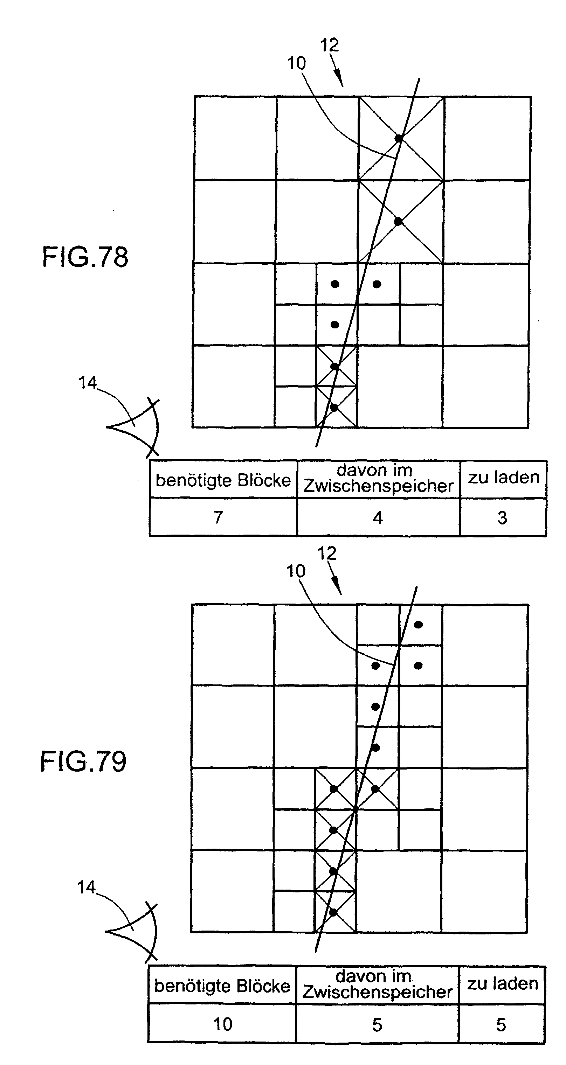

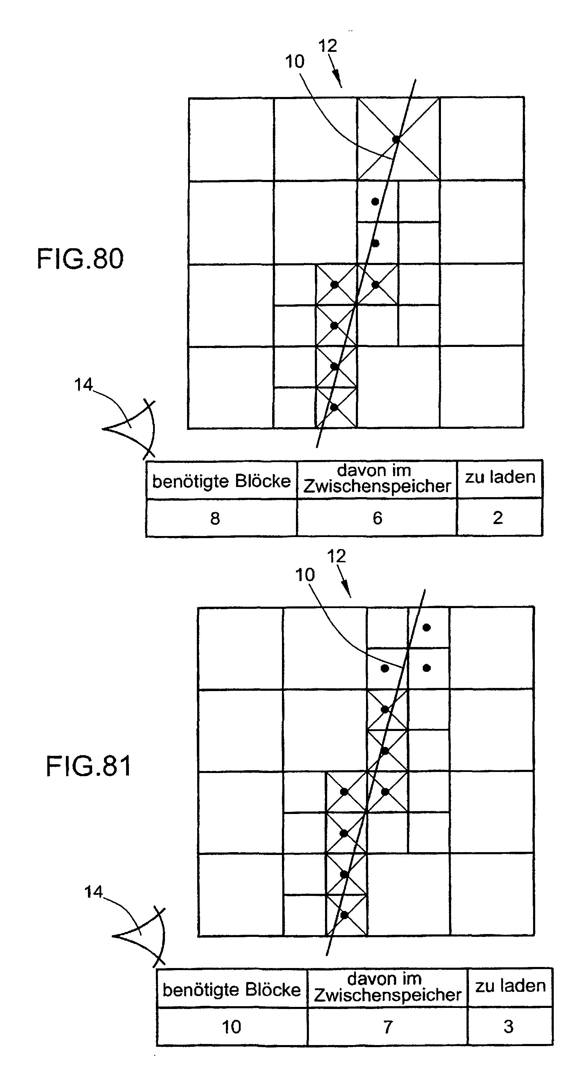

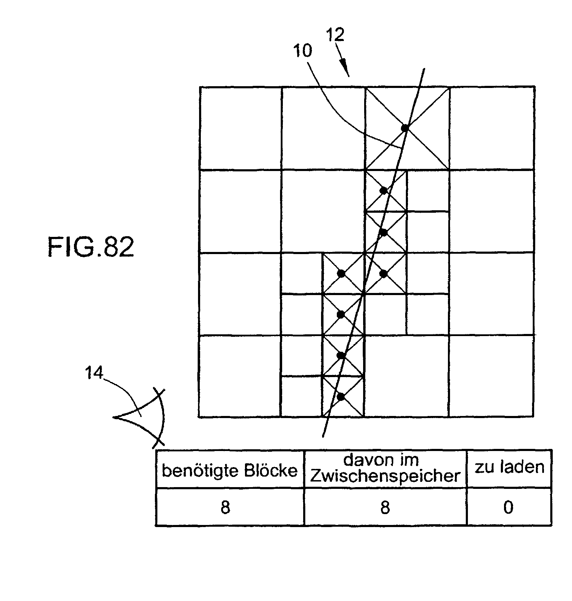

In den Fign. 61 bis 82 ist ein vierter Anwendungsfall des erfindungsgemäßen Verfahrens bildlich dargestellt. Auch hier sind die gleichen Bezugszeichen wie in den übrigen Fign. vergeben. Wiederum können neun Blöcke gleichzeitig im Zwischenspeicher gespeichert sein, wobei wiederum lediglich vier Blöcke gleichzeitig nachgeladen werden können. Es wird davon ausgegangen, dass die darzustellende Ebene 10 nicht verfahren wird. Die für die Darstellung dieser Ebene benötigten Blöcke bei größtmöglicher Auflösung sind in Fig. 82 gekennzeichnet.

## Patentansprüche

1. Verfahren zur Echtzeit-Darstellung großer Mengen von Volumendaten, bei dem
a) eine Teilmenge der Volumendaten, anhand derer innerhalb eines Darstellungserzeugungsintervalls eine Darstellung der Volumendaten erfolgen soll, in einen Zwischenspeicher geladen wird, wobei die maximale Volumendaten-Laderate, mit der Volumendaten innerhalb eines Ladeintervalls in den Zwischenspeicher geladen werden können, sowie die maximale Menge an in dem Zwischenspeicher speicherbaren Volumendaten begrenzt ist und innerhalb der Teilmenge der Volumendaten eine Gruppe von Volumendaten definierbar ist, die für die Bilderzeugung in einem Darstellungserzeugungsintervall weniger relevant als andere Volumendaten der Teilmenge sind,
b) der Volumendatensatz hierarchisch in Blöcke von Volumendaten unterschiedlicher Unterteilungsstufen unterteilt wird, wobei jeder Block einer Unterteilungsebene die Volumendaten der Blöcke der nächst niedrigeren Unterteilungsebene, denen der betreffende Block zugeordnet ist, in einer gröberen Auflösung als die Volumendaten der Blöcke dieser nächst niedrigeren Unterteilungsebene enthält,
c) beginnend mit der obersten Unterteilungsebene ermittelt wird, in welchen Blöcken für die Darstellung im nächsten Darstellungserzeugungsintervall benötigte Volumendaten enthalten sind, und anhand der benötigten Blöcke die Menge an für die Darstellung im nächsten Darstellungserzeugungsintervall benötigten Volumendaten ermittelt wird,
d) die Menge an benötigten Volumendaten mit der Menge an maximal in dem Zwischenspeicher speicherbaren Volumendaten verglichen wird,
e) in dem Fall, dass die Menge an benötigten Volumendaten gleich der maximal speicherbaren Menge an Volumendaten ist, mit Schritt h) fortgefahren wird,
f) in dem Fall, dass die benötigte Menge an Volumendaten kleiner als die maximal speicherbare Menge an Volumendaten ist,
- anhand der Blöcke der nächst niedrigeren Unterteilungsebene ermittelt wird, in welchen Blöcken dieser Unterteilungsebene für die Darstellung im nächsten Darstellungserzeugungsintervall benötigte Volumendaten enthalten sind,
oder
- sofern zuvor bereits der Schritt g) durchgeführt wurde, mit Schritt h) fortgefahren wird,
g) in dem Fall, dass die Menge an benötigten Volumendaten größer als die Menge an maximal speicherbaren Volumendaten ist, statt derjenigen Blöcke, die die Gruppe von für die Darstellung im nächsten Darstellungserzeugungsintervall weniger relevanten Volumendaten enthalten, der diesen Blöcken zugeordnete Block der nächst höheren Unterteilungsebene als benötigter Block ermittelt wird und danach mit Schritt d) fortgefahren wird,
h) die Menge an für die Darstellung im nächsten Darstellungserzeugungsintervall in den Zwischenspeicher benötigten und zu ladenden Volumendaten ermittelt wird, und zwar anhand der für die Darstellung im nächsten Darstellungserzeugungsintervall benötigten und nicht im Zwischenspeicher enthaltenen Blöcke,
i) die Menge an zu ladenden Volumendaten mit der maximalen Volumendaten-Laderate verglichen wird,
j) in dem Fall, dass die Menge an zu ladenden Volumendaten kleiner als die oder gleich der Volumendaten-Laderate ist, die noch zu ladenden der für die Darstellung im nächsten Darstellungserzeugungsintervall benötigten Volumendaten in den Zwischenspeicher geladen werden und im nächsten Darstellungserzeugungsintervall die Darstellung erfolgt,
k) in dem Fall, dass die Menge an zu ladenden Volumendaten größer als die maximale Volumendaten-Laderate ist, statt derjenigen Blöcke, die die Gruppe von für die Darstellung im nächsten Darstellungserzeugungsintervall weniger relevanten Volumendaten enthalten, der diesen Blöcken zugeordnete Block der nächst höheren Unterteilungsebene als benötigter Block ermittelt wird und mit h) fortgefahren wird.

2. Verfahren zur Echtzeit-Darstellung großer Mengen von Volumendaten, bei dem
a) eine Teilmenge der Volumendaten, anhand derer innerhalb eines Darstellungserzeugungsintervalls eine Bilderzeugung erfolgen soll, in einen Zwischenspeicher geladen wird, wobei die maximale Volumendaten-Laderate, mit der Volumendaten innerhalb eines Ladeintervalls in den Zwischenspeicher geladen werden können, und die maximale Menge an in dem Zwischenspeicher speicherbaren Volumendaten begrenzt ist und innerhalb der Teilmenge der Volumendaten eine Gruppe von Volumendaten definierbar ist, die für die Bilderzeugung in einem Darstellungserzeugungsintervall weniger relevant als andere Volumendaten der Teilmenge sind,
b) der Volumendatensatz hierarchisch in Blöcke von Volumendaten unterschiedlicher Unterteilungsebenen unterteilt wird, wobei jeder Block einer Unterteilungsebene die Volumendaten der Blöcke der nächst niedrigeren Unterteilungsebene, denen der betreffende Block zugeordnet ist, in einer gröberen Auflösung als die Volumendaten der Blöcke dieser nächst niedrigeren Unterteilungsebene enthält,
c) beginnend mit der obersten Unterteilungsebene ermittelt wird, in welchen Blöcken für die Darstellung des nächsten Darstellungserzeugungsintervalls benötigte Volumendaten enthalten sind,
d) die Anzahl an benötigten Blöcken mit für die Darstellung im nächsten Darstellungserzeugungsintervall benötigten Volumendaten mit der durch die maximale Menge an in dem Zwischenspeicher speicherbaren Volumendaten bestimmten Maximalblockanzahl an maximal speicherbaren Blöcken verglichen wird,
e) in dem Fall, dass die Anzahl an benötigten Blöcken gleich der Maximalblockanzahl ist, mit Schritt h) fortgefahren wird,
f) in dem Fall, dass die Anzahl an benötigten Blöcken kleiner als die Maximalblockanzahl ist,
- anhand der Blöcke der nächst niedrigeren Unterteilungsebene ermittelt wird, in welchen Blöcken dieser Unterteilungsebene für die Darstellung im nächsten Darstellungserzeugungsintervall benötigte Volumendaten enthalten sind,
oder
- sofern zuvor bereits der Schritt g) durchgeführt wurde, mit Schritt h) fortgefahren wird,
g) in dem Fall, dass die Anzahl der benötigten Blöcke größer als die Maximalblockanzahl ist, statt derjenigen Blöcke, die die Gruppe von für die Darstellung im nächsten Darstellungserzeugungsintervall weniger relevanten Volumendaten enthalten, der diesen Blöcken zugeordnete Block der nächst höheren Unterteilungsebene als benötigter Block ermittelt wird und danach mit Schritt d) fortgefahren wird,
h) die aktuelle Blockladeanzahl an für die Darstellung im nächsten Darstellungserzeugungsintervall in den Zwischenspeicher zu ladenden Blöcke der benötigten Blöcke ermittelt wird, und zwar indem ermittelt wird, welche der für die Darstellung im nächsten Darstellungserzeugungsintervall benötigten Blöcke nicht im Zwischenspeicher enthalten sind,
i) die aktuelle Blockladeanzahl mit der der maximalen Volumendaten-Laderate entsprechenden Maximalblockladeanzahl verglichen wird,
j) in dem Fall, dass die aktuelle Blockladeanzahl kleiner als die oder gleich der Maximalblockladeanzahl ist, die noch zu ladenden der für die Darstellung im nächsten Darstellungserzeugungsintervall benötigten Blöcke in den Zwischenspeicher geladen werden und im nächsten Darstellungserzeugungsintervall die Darstellung erfolgt,
k) in dem Fall, dass die aktuelle Blockladeanzahl größer als die Maximalblockladeanzahl ist, statt derjenigen Blöcke, die die Gruppe von für die Darstellung im nächsten Darstellungserzeugungsintervall weniger relevanten Volumendaten enthalten, der diesen Blöcken zugeordnete Block der nächst höheren Unterteilungsebene als benötigter Block ermittelt wird und mit h) fortgefahren wird.

3. Verfahren nach Anspruch 1 oder 2, **dadurch gekennzeichnet, dass** im Schritt h) dann, wenn die für die Darstellung im nächsten Darstellungserzeugungsintervall benötigten Blöcke bereits Blöcke unterschiedlicher Unterteilungsebenen aufweisen, statt derjenigen Blöcke der niedrigsten Unterteilungsebene, die die Gruppe von für die Darstellung im nächsten Darstellungserzeugungsintervall weniger relevanten Volumendaten enthalten, der diesen Blöcken zugeordnete Block der nächst höheren Unterteilungsebene als benötigter Block ermittelt wird.

4. Verfahren nach einem der Ansprüche 1 bis 3, **dadurch gekennzeichnet, dass** jeder Block jeder Unterteilungsebene die gleiche Anzahl von Volumendaten aufweist.

5. Verfahren nach einem der Ansprüche 1 bis 4, **dadurch gekennzeichnet, dass** in der obersten Unterteilungsebene ein Block existiert.

6. Verfahren nach einem der Ansprüche 1 bis 5, **dadurch gekennzeichnet, dass** für jede nächst niedrigere Unterteilungsebene gilt, dass eine gleiche Anzahl von Blöcken einem Block der nächst höheren Unterteilungsebene zugeordnet ist.

7. Verfahren nach einem der Ansprüche 1 bis 6, **dadurch gekennzeichnet, dass** als Gruppe von für die Darstellung im nächsten Darstellungserzeugungsintervall weniger relevanten Volumendaten solche Volumendaten definiert werden, die am weitesten von dem Betrachter entfernt liegen.

8. Verfahren nach einem der Ansprüche 1 bis 7, **dadurch gekennzeichnet, dass** als Gruppe von für die Darstellung im nächsten Darstellungserzeugungsintervall weniger relevanten Volumendaten in den Darstellungsintervallen unterschiedliche Volumendaten definiert werden.

## Claims

1. Method for real-time rendering of large volume data sets, wherein
a) a partial amount of the volume data, by which the volume data are to be rendered within a rendering generation interval, is stored in a memory, the maximum volume data load rate at which volume data can be loaded into the memory within a load interval being as limited as the maximum amount of volume data storable in the memory, and a set of volume data can be defined within the partial amount of volume data, which are less relevant for image generation in a rendering generation interval than other volume data of the partial amount,
b) the volume data amount is hierarchically divided into blocks of volume data of different divisional steps, each block of one divisional level including the volume data of the blocks of the next lower divisional level to which the relevant block is associated, said volume data having a lower resolution that the volume data of the blocks of those next lower divisional level,
c) starting from the top divisional level, it is determined which blocks contain volume data required for the rendering in the next rendering generation interval, and the amount of volume data required for rendering in the next rendering generation interval is determined from the required blocks,
d) the amount of volume data required is compared to the maximum amount of volume data storable in the memory,
e) if the amount of required volume data is equal to the maximum amount of storable volume data, the process goes on to step h),
f) if the amount of required volume data is smaller than the maximum amount of storable volume data
- it is determined from the blocks of the next lower divisional level which blocks of this divisional level contain volume data required for rendering in the next rendering generation interval,
or
- should step g) have been executed already, the process continues at step h),
g) if the amount of required volume data is larger than the maximum amount of storable volume data, one determines, instead of those blocks that include the set of volume data less relevant to the rendering in the next rendering generation interval, the next higher divisional level block associated with these blocks as the required block, and thereafter continues with step d),
h) the amount of volume data required for the rendering in the next rendering generation interval and to be loaded into the memory is determined from the blocks required for the rendering in the next rendering generation interval and not included in the memory,
i) the amount of volume data to be loaded is compared to the maximum volume data load rate,
j) if the amount of volume data to be loaded is smaller than or equal to the volume data load rate, the volume data required for the rendering in the next rendering generation interval and still to be loaded are loaded into the memory, and the rendering is effected in the next rendering generation interval,
k) if the amount of volume data is larger than the maximum volume data load rate, one determines, instead of those blocks that include the set of volume data less relevant to the rendering in the next rendering generation interval, the next higher divisional level block associated with these blocks as the required block, and thereafter continues with step h).

2. Method for real-time rendering of large amounts of volume data, wherein
a) a partial amount of the volume data, by which a picture is to be generated within a rendering generation interval, is stored in a memory, the maximum volume data load rate at which volume data can be loaded into the memory within a load interval being as limited as the maximum amount of volume data storable in the memory, and a set of volume data can be defined within the partial amount of volume data, which are less relevant for image generation in a rendering generation interval than other volume data of the partial amount,
b) the volume data amount is hierarchically divided into blocks of volume data of different divisional levels, each block of one divisional level including the volume data of the blocks of the next lower divisional level to which the relevant block is associated, said volume data having a lower resolution that the volume data of the blocks of those next lower divisional level,
c) starting from the top divisional level, it is determined which blocks contain volume data required for the rendering in the next rendering generation interval,
d) the number of required blocks including volume data required for the rendering in the next rendering generation interval is compared to the maximum number of storable blocks determined by the maximum number of volume data storable in the memory,
e) if the number of required blocks is equal to the maximum number of blocks, the process goes on to step h),
f) if the number of required blocks is smaller than the maximum number of blocks
- it is determined from the blocks of the next lower divisional level which blocks of this divisional level contain volume data required for rendering in the next rendering generation interval,
or
- should step g) have been executed already, the process continues at step h),
g) if the number of required blocks is larger than the maximum number of blocks, one determines, instead of those blocks that include the set of volume data less relevant to the rendering in the next rendering generation interval, the next higher divisional level block associated with these blocks as the required block, and thereafter continues with step d),
h) the current block loading number of blocks required for the rendering in the next rendering generation interval and to be loaded into the memory is determined by determining which of the blocks required for the rendering in the next rendering generation interval are not included in the memory,
i) the current block loading number is compared to maximum block loading number corresponding to the maximum volume data load rate,
j) if the current block loading number is smaller than or equal to the maximum block loading number, the blocks required for the rendering in the next rendering generation interval and still to be loaded are loaded into the memory, and the rendering is effected in the next rendering generation interval,
k) if the current block loading number is larger than the maximum block loading number, one determines, instead of those blocks that include the set of volume data less relevant to the rendering in the next rendering generation interval, the next higher divisional level block associated with these blocks as the required block, and thereafter continues with step h).

3. The method of claim 1 or 2, **characterized in that**, in step h), if the blocks required for rendering in the next rendering generation interval already contain blocks of different divisional levels, one determines, instead of those blocks of the lowest divisional level that include the set of volume data less relevant for the rendering in the next rendering generation interval, the next higher divisional level block associated with these blocks as the required block.

4. The method of one of claims 1 to 3, **characterized in that** each block of each divisional level comprises the same amount of volume data.

5. The method of one of claims 1 to 4, **characterized in that** one block exists in the topmost divisional level.

6. The method of one of claims 1 to 5, **characterized in that** it is true for each next lower divisional level that an equal number of blocks is associated with a block of the next higher divisional level.

7. The method of one of claims 1 to 6, **characterized in that** such volume data that are farthest from a viewer are defined as a group of volume data less relevant for rendering in the next rendering generation interval.

8. The method of one of claims 1 to 7, **characterized in that**, in the rendering generation intervals, different volume data are defined as a group of volume data less relevant for rendering in the next rendering generation interval.

## Revendications

1. Procédé permettant la représentation en temps réel de grandes quantités de données volumétriques, dans lequel
a) une partie des données volumétriques, à l'aide de laquelle une représentation des données volumétriques doit avoir lieu dans un intervalle de génération de représentation, est chargée dans une mémoire intermédiaire, le débit de chargement maximal des données volumétriques avec lequel les données volumétriques peuvent être chargées dans un intervalle de chargement dans la mémoire intermédiaire et la quantité maximale de données volumétriques mémorisables dans la mémoire intermédiaire étant limités, et un groupe de données volumétriques qui sont moins pertinentes que d'autres données volumétriques de la partie pour la génération d'image dans un intervalle de génération de représentation pouvant être défini à l'intérieur de la partie,
b) le jeu de données volumétriques est hiérarchisé en blocs de données volumétriques de différents niveaux, chaque bloc d'un niveau contenant les données volumétriques des blocs du niveau immédiatement inférieur auxquels le bloc en question est associé, avec une définition plus grossière que les données volumétriques des blocs de ce niveau immédiatement inférieur,
c) les blocs dans lesquels sont contenues les données volumétriques nécessaires pour la représentation dans l'intervalle de génération de représentation suivant sont déterminés en commençant par le niveau supérieur, et la quantité de données volumétriques nécessaires pour la représentation dans l'intervalle de génération de représentation suivant est déterminée à l'aide des blocs nécessaires,
d) la quantité de données volumétriques nécessaires est comparée avec la quantité maximale de données volumétriques mémorisables dans la mémoire intermédiaire,
e) dans le cas où la quantité de données volumétriques nécessaires est égale à la quantité maximale de données volumétriques mémorisables, le processus passe à l'étape h),
f) dans le cas où la quantité de données volumétriques nécessaires est inférieure à la quantité maximale de données volumétriques mémorisables,
- à l'aide des blocs du niveau immédiatement inférieur sont déterminés les blocs de ce niveau dans lesquels sont contenues les données volumétriques nécessaires pour la représentation dans l'intervalle de génération de représentation suivant,
ou
- si l'étape g) a déjà été exécutée, le processus passe à l'étape h),
g) dans le cas où la quantité de données volumétriques nécessaires est supérieure à la quantité maximale de données volumétriques mémorisables, à la place des blocs qui contiennent le groupe de données volumétriques moins pertinentes pour la représentation dans l'intervalle de génération de représentation suivant, le bloc du niveau immédiatement supérieur associé à ces blocs est déterminé comme bloc nécessaire, puis le processus passe à l'étape d),
h) la quantité de données volumétriques nécessaires et à charger dans la mémoire intermédiaire pour la représentation dans l'intervalle de génération de représentation suivant est déterminée, et ceci à l'aide des blocs non contenus dans la mémoire intermédiaire nécessaires pour la représentation dans l'intervalle de génération suivant,
i) la quantité de données volumétriques à charger est comparée avec le débit de chargement maximal de données volumétriques,
j) dans le cas où la quantité de données volumétriques à charger est inférieure ou égale au débit de chargement de données volumétriques, les données volumétriques nécessaires pour la représentation dans l'intervalle de génération de représentation suivant restant à charger sont chargées dans la mémoire intermédiaire et la représentation a lieu dans l'intervalle de génération de représentation suivant,
k) dans le cas où la quantité de données volumétriques à charger est supérieure au débit de chargement maximal de données volumétriques, à la place des blocs qui contiennent le groupe de données volumétriques moins pertinentes pour la représentation dans l'intervalle de génération de représentation suivant, le bloc du niveau immédiatement supérieur associé à ces blocs est déterminé comme bloc nécessaire et le processus passe à l'étape h).

2. Procédé permettant la représentation en temps réel de grandes quantités de données volumétriques, dans lequel
a) une partie des données volumétriques, à l'aide de laquelle une génération d'image doit avoir lieu dans un intervalle de génération de représentation, est chargée dans une mémoire intermédiaire, le débit de chargement maximal des données volumétriquos avec lequel les données volumétriques peuvent être chargées dans un intervalle de chargement dans la mémoire intermédiaire et la quantité maximale de données volumétriques mémorisables dans la mémoire intermédiaire étant limités, et un groupe de données volumétriques qui sont moins pertinentes que d'autres données volumétriques de la partie pour la génération d'image dans un intervalle de génération de représentation pouvant être défini à l'intérieur de la partie,
b) le jeu de données volumétriques est hiérarchisé en blocs de données volumétriques de différents niveaux, chaque bloc d'un niveau contenant les données volumétriques des blocs du niveau immédiatement inférieur auxquels le bloc en question est associé, avec une définition plus grossière que les données volumétriques des blocs de ce niveau immédiatement inférieur,
c) les blocs dans lesquels sont contenues les données volumétriques nécessaires pour la représentation dans l'intervalle de génération de représentation suivant sont déterminés en commençant par le niveau supérieur,
d) le nombre de blocs nécessaires contenant des données volumétriques nécessaires pour la représentation dans l'intervalle de génération de représentation suivant est comparé avec le nombre maximal de blocs mémorisables déterminé par la quantité maximale de données volumétriques mémorisables dans la mémoire intermédiaire,
e) dans le cas où le nombre de blocs nécessaires est égal au nombre maximal de blocs, le processus passe à l'étape h),
f) dans le cas où le nombre de blocs nécessaires est inférieur au nombre maximal de blocs,
- à l'aide des blocs du niveau immédiatement inférieur sont déterminés les blocs de ce niveau dans lesquels sont contenues les données volumétriques nécessaires pour la représentation dans l'intervalle de génération de représentation suivant,
ou
- si l'étape g) a déjà été exécutée, le processus passe à l'étape h),
g) dans le cas où le nombre de blocs nécessaires est supérieur au nombre maximal de blocs, à la place des blocs qui contiennent le groupe de données volumétriques moins pertinentes pour la représentation dans l'intervalle de génération de représentation suivant, le bloc du niveau immédiatement supérieur associé à ces blocs est déterminé comme bloc nécessaire, puis le processus passe à l'étape d),
h) le nombre actuel de blocs nécessaires et à charger dans la mémoire intermédiaire pour la représentation dans l'intervalle de génération de représentation suivant est déterminé, et ceci en déterminant les blocs nécessaires pour la représentation dans l'intervalle de génération suivant qui ne sont pas contenus dans la mémoire intermédiaire,
i) la nombre actuel de blocs à charger est comparé avec nombre maximal de blocs chargeables correspondant au débil de chargement maximal de données volumétriques,
j) dans le cas où le nombre actuel de blocs à charger est inférieur ou égal au nombre maximal de blocs chargeables, les blocs nécessaires pour la représentation dans l'intervalle de génération de représentation suivant restant à charger sont chargés dans la mémoire intermédiaire et la représentation a lieu dans l'intervalle de génération de représentation suivant,
k) dans le cas où le nombre actuel de blocs à charger est supérieur au nombre maximal de blocs chargeables, à la place des blocs qui contiennent le groupe de données volumétriques moins pertinentes pour la représentation dans l'intervalle de génération de représentation suivant, le bloc du niveau immédiatement supérieur associé à ces blocs est déterminé comme bloc nécessaire et le processus passe à l'étape h).

3. Procédé selon la revendication 1 ou 2, **caractérisé en ce qu'**à l'étape h), lorsque les blocs nécessaires pour la représentation dans l'intervalle de génération de représentation suivant présentent déjà des blocs de différents niveaux, à la place des blocs du niveau inférieur qui contiennent le groupe de données volumétriques moins pertinentes pour la représentation dans l'intervalle de génération de représentation suivant, le bloc du niveau immédiatement inférieur associé à ces blocs est déterminé comme bloc nécessaire.

4. Procédé selon l'une des revendications 1 à 3, **caractérisé en ce que** chaque bloc de chaque niveau présente le même nombre de données volumétriques.

5. Procédé selon l'une des revendications 1 à 4, **caractérisé en ce qu'**il existe un bloc dans le niveau supérieur.

6. Procédé selon l'une des revendications 1 à 5, **caractérisé en ce que** pour chaque niveau immédiatement inférieur, un même nombre de blocs est associé à un bloc du niveau immédiatement supérieur.

7. Procédé selon l'une des revendications 1 à 6, **caractérisé en ce que** comme groupe de données moins pertinentes pour la représentation dans l'intervalle de génération de représentation suivant sont définies les données volumétriques qui sont les plus éloignées de l'observateur.

8. Procédé selon l'une des revendications 1 à 7, **caractérisé en ce que** comme groupe de données moins pertinentes pour la représentation dans l'intervalle de génération de représentation suivant sont définies différentes données volumétriques dans les intervalles de représentation.
